# EUROPEAN PATENT APPLICATION

(11) **EP 4 819 271 A1**
(43) Date of publication of application: **07.10.2026**
(21) Application number: 24897174.9
(22) Date of filing: 28.10.2024
(51) Int. Cl.: H01M 10/052, H01M 10/0562

(54) **SOLID ELECTROLYTE AND ALL-SOLID-STATE LITHIUM ION SECONDARY BATTERY**

(30) Priority: 29.11.2023 JP 2023201370
(71) Applicant: Institute of Science Tokyo, Tokyo 152-8550 (JP)
(72) Inventor: SHIRATORI, Yosuke, Ashigarakami-gun, Kanagawa 258-8577 (JP); SAITO, Kengo, Ashigarakami-gun, Kanagawa 258-8577 (JP); WATANABE, Kenta, Ashigarakami-gun, Kanagawa 258-8577 (JP); SATO, Ryota, Ashigarakami-gun, Kanagawa 258-8577 (JP); YASUI, Shintaro, Tokyo 152-8550 (JP)
(74) Representative: Forstmeyer, Dietmar
(86) International application number: PCT/JP2024/038292
(87) International publication number: WO 2025/115485

(57) **Abstract**

An all-solid-state lithium ion secondary battery in which a solid electrolyte layer contains an amorphous solid electrolyte which contains a lithium-containing oxide having Li, **B,** and O, a lithium salt, and H₂O, and in the solid electrolyte, a ratio of a content of the lithium salt to a content of the lithium-containing oxide is 0.001 to 1.5 as a molar ratio, and a H₂O content of a solid electrolyte constituting a laminate including a positive electrode active material layer, a solid electrolyte layer, and a negative electrode active material layer is 4.5 to 12.5% by mass, and a solid electrolyte suitable as a material of the secondary battery.

## Description

### FIELD OF THE INVENTION

The present invention relates to a solid electrolyte and an all-solid-state lithium ion secondary battery.

### BACKGROUND OF THE INVENTION

Conventionally, a liquid electrolyte having high ion conductivity has been used for a lithium ion secondary battery. However, since the liquid electrolyte is flammable, there is a problem in safety. In addition, it is difficult to make the battery compact due to the liquid electrolyte, and the limitation on the capacity also becomes a problem when the battery is enlarged.

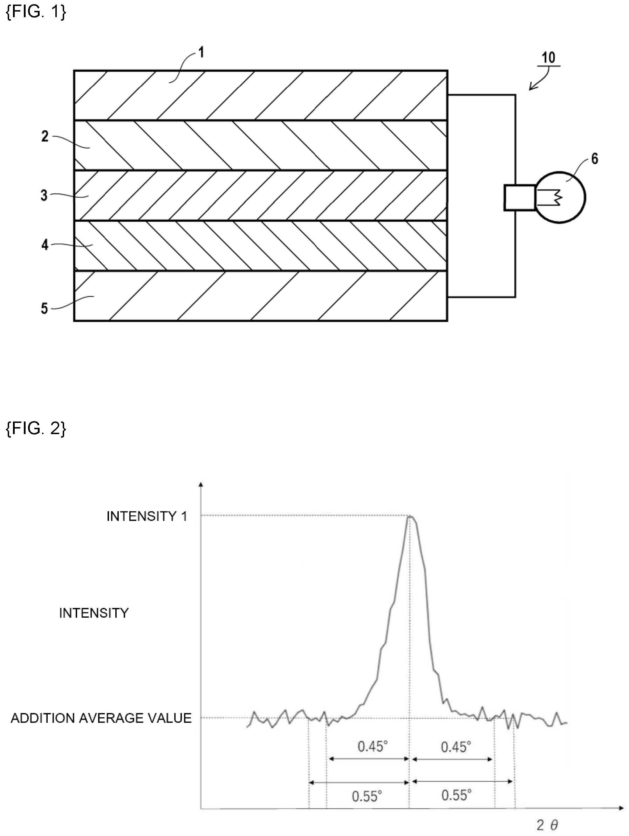

In contrast, the all-solid-state lithium ion secondary battery is expected as a next-generation battery capable of solving these problems. FIG. 1 shows a basic configuration of an all-solid-state lithium ion secondary battery. An all-solid-state lithium ion secondary battery 10 includes a negative electrode current collector 1, a negative electrode active material layer 2, a solid electrolyte layer 3, a positive electrode active material layer 4, and a positive electrode current collector 5 in this order as viewed from the negative electrode side. The respective layers are in contact with one another and have an adjacent structure. By adopting such a structure, during charging, electrons (e⁻) are supplied to the negative electrode side, and lithium ions (Li⁺) having moved through the solid electrolyte layer 3 are accumulated in the negative electrode side. On the other hand, during discharging, the lithium ions (Li⁺) accumulated in the negative electrode are returned to the positive electrode side through the solid electrolyte layer 3, and electrons are supplied to an operation portion 6. In an illustrated example, an electric bulb is employed as a model for the operation portion 6, and is turned on by discharging.

As described above, in the all-solid-state lithium ion secondary battery, excellent lithium ion conductivity is required for the solid electrolyte layer in order to obtain desired charge-discharge characteristics.

As the solid electrolyte constituting the solid electrolyte layer, a sulfide-based solid electrolyte or an oxide-based solid electrolyte is mainly used.

Since the sulfide-based solid electrolyte is soft and plastically deformed, particles are bound only by pressure molding. Therefore, the sulfide-based solid electrolyte has low interface resistance between particles and excellent ion conductivity. However, the sulfide-based solid electrolyte has a problem that toxic hydrogen sulfide is generated when it reacts with water.

In contrast, the oxide-based solid electrolyte has an advantage of high safety. However, the oxide-based solid electrolyte is hard and hardly plastically deformed. In order to enhance the binding properties between the particles of the oxide-based solid electrolyte, a high-temperature sintering treatment is required, and there are restrictions from the viewpoint of the production efficiency of the battery, the energy cost, and the like. For example, Patent Literature 1 discloses a solid electrolyte formed of a lithium-containing oxide having a specific elemental composition, and describes that this solid electrolyte exhibits high ion conductivity. However, in order to use this lithium-containing oxide as a solid electrolyte sheet, a high-temperature sintering treatment is required.

As a technique for coping with this problem, for example, Patent Literature 2 describes an oxide-based solid electrolyte containing an amorphous lithium-containing oxide represented by amorphous lithium tetraborate, a lithium salt, and water (H₂O). Patent Literature 2 also describes that the molar ratio of the lithium salt to the lithium-containing oxide is 0.001 to 1.5, the molar ratio of H₂O to the lithium-containing oxide is 3 to 15, and the like. According to the technique described in Patent Literature 2, it is possible to provide an oxide-based solid electrolyte having excellent ion conductivity without requiring a sintering treatment.

### CITATION LIST

### PATENT LITERATURES

Patent Literature 1: JP-A-2018-052755 ("JP-A" means an unexamined published Japanese patent application)
Patent Literature 2: WO 2022/118870

### SUMMARY OF INVENTION

### TECHNICAL PROBLEM

The solid electrolyte described in Patent Literature 2 is in the form of a solid powder while containing a large amount of H₂O to some extent, is soft while containing a lithium-containing oxide, can secure binding between particles even without being subjected to a sintering treatment or even without blending a binder such as an organic polymer, and has characteristics that could not be achieved by previous oxide-based solid electrolytes. However, as a result of studies conducted by the present inventors, it has been found that although the solid electrolyte described in Patent Literature 2 has good binding properties, an all-solid-state lithium ion secondary battery using this solid electrolyte for a solid electrolyte layer has room for improvement from the viewpoint of sufficiently maintaining battery performance when charging and discharging are repeated (from the viewpoint of cycle characteristics).

An object of the present invention is to provide an all-solid-state lithium ion secondary battery using an oxide-based solid electrolyte containing an amorphous lithium-containing oxide, a lithium salt, and H₂O in at least a solid electrolyte layer, the all-solid-state lithium ion secondary battery having excellent cycle characteristics while achieving a sufficient discharge capacity. In addition, an object of the present invention is to provide a solid electrolyte composed of an oxide-based solid electrolyte containing an amorphous lithium-containing oxide, a lithium salt, and H₂O, in which when the solid electrolyte is used as a solid electrolyte of an all-solid-state lithium ion secondary battery, the obtained battery can have excellent cycle characteristics while achieving a sufficient discharge capacity.

### SOLUTION TO PROBLEM

The problems of the present invention were solved by the following means.
[1] An all-solid-state lithium ion secondary battery including a positive electrode layer, a solid electrolyte layer, and a negative electrode layer arranged in this order,
   wherein at least the solid electrolyte layer contains an amorphous solid electrolyte which contains a lithium-containing oxide having Li, B, and O, a lithium salt, and H₂O, and in the amorphous solid electrolyte, a ratio of a content of the lithium salt to a content of the lithium-containing oxide is 0.001 to 1.5 as a molar ratio, and
   wherein a H₂O content based on the Karl Fischer titration method at 130°C of the solid electrolyte constituting a laminate including a positive electrode active material layer, the solid electrolyte layer, and a negative electrode active material layer is 4.5 to 12.5% by mass.
[2] The all-solid-state lithium ion secondary battery described in to [1], wherein the lithium-containing oxide contains Li₂₊ₓB_{4+y}O_{7+z},
   wherein $- 0.3 < x < 0.3 , - 0.3 < y < 0.3 , and - 0.3 < z < 0.3 .$
[3] The all-solid-state lithium ion secondary battery described in [1] or [2], wherein the lithium salt is represented by the following formula (1):

   Formula (1) LiN(R_{f1}SO₂)(R_{f2}SO₂)

   wherein R_{f1} and R_{f2} each independently represent a halogen atom or a perfluoroalkyl group.
[4] The all-solid-state lithium ion secondary battery described in any one of [1] to [3], wherein the solid electrolyte contains a polymer having a solubility parameter of 20 or more.
[5] A solid electrolyte containing a lithium-containing oxide having Li, B, and O, a lithium salt, and H₂O,
   wherein the solid electrolyte is in an amorphous state, and in the solid electrolyte, a ratio of a content of the lithium salt to a content of the lithium-containing oxide is 0.001 to 1.5 as a molar ratio, and
   wherein a H₂O content based on the Karl Fischer titration method at 130°C is 4.5 to 12.5% by mass.
[6] The solid electrolyte described in [5], wherein the lithium-containing oxide contains Li₂₊ₓB_{4+y}O_{7+z}, wherein $- 0.3 < x < 0.3 , - 0.3 < y < 0.3 , and - 0.3 < z < 0.3 .$
[7] The solid electrolyte described in [5] or [6], wherein the lithium salt is represented by the following formula (1):

   Formula (1) LiN(R_{f1}SO₂)(R_{f2}SO₂)

   wherein R_{f1} and R_{f2} each independently represent a halogen atom or a perfluoroalkyl group.
[8] The solid electrolyte described in any one of [5] to [7], wherein the solid electrolyte contains a polymer having a solubility parameter of 20 or more.

In the present invention or the present specification, a numerical value range indicated by using the term "to" means a range including the numerical values described before and after the term "to" as the lower limit value and the upper limit value, respectively.

In the present invention, "H₂O" contained in the solid electrolyte means one detected as "H₂O" by the Karl Fischer titration method at 130°C. That is, the term "H₂O" in the present invention is not limited to those present as water molecules in the solid electrolyte, and may include, for example, an OH group bonded to a lithium-containing oxide.

### ADVANTAGEOUS EFFECTS OF INVENTION

The all-solid-state lithium ion secondary battery of the present invention includes an oxide-based solid electrolyte containing an amorphous lithium-containing oxide, a lithium salt, and H₂O in at least a solid electrolyte layer, achieves a sufficient discharge capacity, and also has excellent cycle characteristics. In addition, the solid electrolyte of the present invention is composed of an oxide-based solid electrolyte containing an amorphous lithium-containing oxide, a lithium salt, and H₂O, and when the solid electrolyte is used as a solid electrolyte of an all-solid-state lithium ion secondary battery, the obtained battery can have excellent cycle characteristics while achieving a sufficient discharge capacity.

### BRIEF DESCRIPTION OF DRAWINGS

{FIG 1}
   FIG. 1 is a cross-sectional view schematically showing an example of a configuration of an all-solid-state lithium ion secondary battery.
{FIG 2}
   FIG. 2 is a diagram showing an example of an X-ray diffraction pattern for explaining X-ray diffraction characteristics of a solid electrolyte (I) used in the present invention.
{FIG 3}
   FIG. 3 is a diagram showing an X-ray diffraction pattern of powdery Li₂B₄O₇ crystals.

### DESCRIPTION OF EMBODIMENTS

### [All-Solid-State Lithium Ion Secondary Battery]

The all-solid-state lithium ion secondary battery of the present invention (hereinafter also referred to as "the secondary battery of the present invention") is formed by arranging a positive electrode layer, a solid electrolyte layer, and a negative electrode layer in this order. The solid electrolyte layer is formed using an amorphous solid electrolyte having a specific composition described later. In addition, the positive electrode active material layer constituting the positive electrode layer usually contains the solid electrolyte together with the positive electrode active material, and the negative electrode active material layer constituting the negative electrode layer also usually contains the solid electrolyte together with the negative electrode active material.

In the secondary battery of the present invention, a H₂O content based on the Karl Fischer titration method at 130°C (a H₂O content determined by the Karl Fischer titration method at 130°C) in a solid electrolyte constituting a laminate including a positive electrode active material layer, a solid electrolyte layer, and a negative electrode active material layer (a laminate structure excluding a current collector) (an entire solid electrolyte in the laminate) is 4.5 to 12.5% by mass. The H₂O content based on the Karl Fischer titration method at 130°C can be determined by the method described in Examples described later. The H₂O content based on the Karl Fischer titration method at 130°C of the solid electrolyte constituting the laminate is preferably 4.5 to 11.5% by mass, more preferably 4.5 to 10.5% by mass, still more preferably 5.0 to 9.5% by mass, and still more preferably 5.0 to 8.5% by mass from the viewpoint of high discharge capacity and improvement of cycle characteristics.

Preferred embodiments of respective layers of the secondary battery of the present invention will be described.

### <Solid Electrolyte Layer>

The solid electrolyte layer constituting the secondary battery of the present invention can be formed, for example, as follows. That is, by subjecting an amorphous (synonymous with non-crystal or non-crystalline) solid electrolyte having a specific composition or a mixture of this solid electrolyte and other components to an appropriate drying treatment, the solid electrolyte is controlled so that the H₂O content based on the Karl Fischer titration method at 130°C is 4.5 to 12.5% by mass. As described above, after the H₂O content of the solid electrolyte is reduced to a specific range, the solid electrolyte or the mixture containing the solid electrolyte can be molded in a layer (compression molding, compact molding, etc.), so that a solid electrolyte layer can be formed (pre-drying method).

A method of the above appropriate drying treatment will be described later.

As another method, for example, an amorphous solid electrolyte having a specific composition, or a mixture of the solid electrolyte and other components is molded in a layer, or a slurry containing an amorphous solid electrolyte having a specific composition, or a mixture of the solid electrolyte and other components is applied to form a coating film, and then the H₂O content based on the Karl Fischer titration method at 130°C is controlled to 4.5 to 12.5% by mass through an appropriate drying treatment, so that a solid electrolyte layer constituting the secondary battery of the present invention can be also formed (post-drying method).

The amorphous solid electrolyte having a specific composition includes a lithium-containing oxide containing Li, B, and O (hereinafter, also simply referred to as a "lithium-containing oxide"), a lithium salt, and H₂O regardless of the presence or absence of the appropriate drying treatment. Note that the more carefully the drying treatment is performed, the more the H₂O content decreases. In the solid electrolyte, a value of a ratio of a content of the lithium salt to a content of the lithium-containing oxide (lithium salt/lithium-containing oxide) is 0.001 to 1.5 as a molar ratio.

The amorphous solid electrolyte having a specific composition can contain, for example, a polymer having a solubility parameter (SP value) of 20 or more. When the solid electrolyte contains a polymer having an SP value of 20 or more, desired high flexibility or adhesion can be imparted to the formed solid electrolyte layer without substantially impairing ion conductivity.

In the pre-drying method, the H₂O content based on the Karl Fischer titration method at 130°C in the solid electrolyte before being molded in a layer is more preferably 4.5 to 11.5% by mass, still more preferably 4.5 to 10.5% by mass, still more preferably 5.0 to 9.5% by mass, and still more preferably 5.0 to 8.5% by mass by subjecting the solid electrolyte to the appropriate drying treatment. By setting the H₂O content as described above, the layer formed by molding (compression molding, compact molding, etc.) can be a solid electrolyte layer with a desired small H₂O content.

In addition, after the above appropriate drying treatment, the solid electrolyte before being molded in a layer is mixed with a positive electrode active material and molded to form a positive electrode active material layer, and similarly, the solid electrolyte is mixed with a negative electrode active material and molded to form a negative electrode active material layer, thereby forming a laminate including the positive electrode active material layer, the solid electrolyte layer, and the negative electrode active material layer, whereby the H₂O content based on the Karl Fischer titration method at 130°C of the entire solid electrolyte constituting the laminate is controlled to 4.5 to 12.5% by mass.

In the post-drying method, in the solid electrolyte in the layer or coating film before being subjected to the appropriate drying treatment, the H₂O content based on the Karl Fischer titration method at 130°C is considerably higher than 12.5% by mass. In this case, by subjecting the formed layer or coating film to the above appropriate drying treatment, the H₂O content based on the Karl Fischer titration method at 130°C of the solid electrolyte layer to be obtained can be controlled to 4.5 to 12.5% by mass.

In addition, a solid electrolyte in a state in which the H₂O content based on the Karl Fischer titration method at 130°C is higher than 12.5% by mass is mixed with a positive electrode active material to form a positive electrode active material layer, and similarly, the solid electrolyte is mixed with a negative electrode active material to form a negative electrode active material layer, thereby forming a laminate including the positive electrode active material layer, the solid electrolyte layer, and the negative electrode active material layer, and subjecting the laminate to the above appropriate drying treatment, whereby the entire solid electrolyte constituting the obtained laminate can be controlled so that the H₂O content based on the Karl Fischer titration method at 130°C is 4.5 to 12.5% by mass.

The H₂O content is more preferably controlled to 4.5 to 11.5% by mass, still more preferably controlled to 4.5 to 10.5% by mass, still more preferably controlled to 5.0 to 9.5% by mass, and still more preferably controlled to 5.0 to 8.5% by mass.

Hereinafter, regardless of whether the H₂O content based on the Karl Fischer titration method at 130°C is within or outside the range of 4.5 to 12.5% by mass, the amorphous solid electrolyte having a specific composition is also referred to as the "solid electrolyte (I)". In addition, among the solid electrolytes (I), a solid electrolyte with a H₂O content based on the Karl Fischer titration method at 130°C of 4.5 to 12.5% by mass is also referred to as a "solid electrolyte (Ia)". The solid electrolyte (I) is in the form of solid particles (powder) while containing H₂O.

The solid electrolyte (I) is in an amorphous state and exhibits elastic characteristics that are easily plastically deformed. As a result, in the solid electrolyte layer containing the solid electrolyte (I) formed through a pressure treatment or the like, adhesion between the solid electrolytes (I) and/or adhesion between the solid electrolyte (I) and another ion conductor or the like is improved, interface resistance can be reduced, and more excellent ion conductivity can be obtained. By forming the solid electrolyte layer using the solid electrolyte (I), a lithium ion conductor exhibiting excellent lithium ion conductivity can be formed by a pressure treatment or the like even though the solid electrolyte is an oxide-based solid electrolyte with high safety even without being subjected to a high-temperature sintering treatment. Furthermore, when the solid electrolyte (I) contains a polymer having an SP value of 20 or more, the formed solid electrolyte layer can exhibit higher flexibility and the adhesion can also be further enhanced without substantially impairing the ion conductivity.

The H₂O contained in the solid electrolyte (I) contains at least bound water. The reason why the solid electrolyte (I) exhibits high lithium ion conductivity is not clear, but it is considered that in the amorphous solid electrolyte (I), a soft hydration layer is formed on the surface of the lithium-containing oxide, and lithium derived from a lithium salt is contained in a large amount in the hydration layer, and as a result, the ion conductivity is further improved. In addition, most of the H₂O contained in the solid electrolyte (Ia) is considered to be bound water.

Here, the "bound water" in the present invention or the specification means H₂O other than water present as free water, or an OH group bonded to a lithium-containing oxide. Even if the solid electrolyte (I) contains H₂O, the solid electrolyte (I) is in a state of solid particles (including a state in which the solid particles are bound to each other). That is, the solid electrolyte (I) contains bound water that is not removed or is difficult to be removed under normal drying conditions. H₂O contained in the solid electrolyte (I) or the solid electrolyte (Ia) may partially contain free water as long as the effect of the present invention is not impaired.

In the present invention, the solid electrolyte (I) being in the "amorphous state" means that the following X-ray diffraction characteristics are satisfied.

### (X-Ray diffraction characteristics)

In an X-ray diffraction pattern obtained by X-ray diffraction measurement of the solid electrolyte (I) using CuKα rays, none of a first peak having a peak top located in the range of diffraction angle 2θ of 21.6 to 22.0° and a full width at half maximum of 0.65° or less, a second peak having a peak top located in the range of diffraction angle 2θ of 25.4 to 25.8° and a full width at half maximum of 0.65° or less, a third peak having a peak top located in the range of diffraction angle 2θ of 33.4 to 33.8° and a full width at half maximum of 0.65° or less, and a fourth peak having a peak top located in the range of diffraction angle 2θ of 34.4 to 34.8° and a full width at half maximum of 0.65° or less is present, or
when at least one of the first peak, the second peak, the third peak, and the fourth peak (hereinafter referred to as "peak X") is present in the X-ray diffraction pattern, at least one peak among the peaks X has an intensity ratio of 5.0 or less, the intensity ratio being calculated by the following intensity measurement method.

### - Intensity measurement method -

The average intensity (Av1) in the range of +0.45° to +0.55° from the diffraction angle 2θ of the peak top of the peak X is calculated, the average intensity (Av2) in the range of -0.55° to -0.45° from the diffraction angle 2θ of the peak top of the peak X is calculated, and the addition average value of Av1 and Av2 is calculated. A value of a ratio of the peak intensity at the peak top of the peak X to the addition average value (peak intensity at the peak top of the peak X/addition average value) is defined as an intensity ratio.

The X-ray diffraction characteristics will be described in more detail.

In the X-ray diffraction pattern obtained by X-ray diffraction measurement of the solid electrolyte (I) using CuKα rays, when none of the first peak, the second peak, the third peak, and the fourth peak is present, the above X-ray diffraction characteristics are satisfied, and the solid electrolyte (I) is in an amorphous state.

Also, in the X-ray diffraction pattern obtained by X-ray diffraction measurement of the solid electrolyte (I) using CuKα rays, when the peak X is present, the X-ray diffraction characteristics are satisfied even when at least one peak of the peaks X satisfies an intensity ratio obtained by the intensity measurement method of 5.0 or less, and the solid electrolyte (I) is in an amorphous state.

Here, the full width at half maximum (FWHM) of the peak means a peak width (°) at a point of 1/2 of the peak intensity at the peak top.

The intensity measurement method will be described in more detail with reference to FIG. 2.

FIG. 2 is a diagram showing an example of a peak X appearing in a diffraction pattern obtained by X-ray diffraction measurement of the solid electrolyte (I) using CuKα rays. In the diffraction pattern shown in FIG. 2, a specific peak in which the intensity of the peak top indicates intensity 1 is shown. In the intensity measurement method, as shown in FIG. 2, the average intensity (Av1) in the range of +0.45° to +0.55° from the diffraction angle 2θ of the peak top of the peak X is calculated, and further, the average intensity (Av2) in the range of -0.55° to -0.45° from the diffraction angle 2θ of the peak top of the peak X is calculated. Next, an addition average value of Av1 and Av2 is calculated, and a value of a ratio of intensity 1 to the addition average value is obtained as an intensity ratio. When the X-ray diffraction characteristics are satisfied, it means that there is no or almost no crystal structure in the solid electrolyte (I), and the solid electrolyte (I) is in an amorphous state.

That is, the first peak to the fourth peak are peaks derived mainly from a crystal structure in the solid electrolyte (for example, a crystal structure of lithium tetraborate), and when these peaks are not present, it means that the solid electrolyte is in an amorphous state. In addition, even when at least one of the first peak to the fourth peak is present, the fact that the intensity ratio of at least one peak among the present peaks X is 5.0 or less means that there is almost no crystal structure that inhibits the effect of the present invention in the solid electrolyte (I). For example, a peak derived from a specific component (for example, a lithium salt) may overlap any one of the first peak to the fourth peak described above. However, in the amorphous solid electrolyte, since all of the first peak to the fourth peak usually decrease, even if a peak due to the above-described specific component accidentally overlaps any of the first peak to the fourth peak and one large peak appears, the presence of at least one peak X having an intensity ratio of a predetermined value or less can be said to indicate that the solid electrolyte (I) is in an amorphous state.

The X-ray diffraction measurement is performed using CuKα rays under measurement conditions of 0.01°/step and 3°/min.

In the X-ray diffraction pattern obtained by X-ray diffraction measurement of the solid electrolyte (I) using CuKα rays, it is preferable that none of the first peak, the second peak, the third peak, and the fourth peak is present, or even if at least one peak X among the first peak, the second peak, the third peak, and the fourth peak is present, the intensity ratio of at least one peak among the peaks X is 3.0 or less.

In particular, it is more preferable that none of the first peak, the second peak, the third peak, and the fourth peak is present, or even if at least one peak X among the first peak, the second peak, the third peak, and the fourth peak is present, the intensity ratio of at least one peak among the peaks X is 2.0 or less.

In the X-ray diffraction pattern, when the peak top is located in the range of 21.6 to 22.0° and there are two or more peaks having a full width at half maximum of 0.65° or less, the peak having the highest diffracted X-ray intensity is selected as the first peak, and the X-ray diffraction characteristics are determined.

Also, in the X-ray diffraction pattern, when the peak top is located in the range of 25.4 to 25.8° and there are two or more peaks having a full width at half maximum of 0.65° or less, the peak having the highest diffracted X-ray intensity is selected as the second peak, and the X-ray diffraction characteristics are determined.

Further, in the X-ray diffraction pattern, when the peak top is located in the range of 33.4 to 33.8° and there are two or more peaks having a full width at half maximum of 0.65° or less, the peak having the highest diffracted X-ray intensity is selected as the third peak, and the X-ray diffraction characteristics are determined.

Furthermore, in the X-ray diffraction pattern, when the peak top is located in the range of 34.4 to 34.8° and there are two or more peaks having a full width at half maximum of 0.65° or less, the peak having the highest diffracted X-ray intensity is selected as the fourth peak, and the X-ray diffraction characteristics are determined.

The method for bringing the solid electrolyte (I) into an amorphous state is not particularly limited. For example, in the preparation of the solid electrolyte (I), there is a method of using a lithium-containing oxide subjected to a mechanical milling treatment as a raw material. This mechanical milling treatment may be performed in the presence of a lithium salt.

### - Mechanical milling treatment -

The mechanical milling treatment is a treatment of pulverizing a sample while applying mechanical energy. Examples of the mechanical milling treatment include a ball mill, a vibration mill, a turbo mill, and a disc mill, and a ball mill is preferable from the viewpoint of obtaining the amorphous solid electrolyte (I) with high productivity. Examples of the ball mill include a vibrating ball mill, a rotary ball mill, and a planetary ball mill, and a planetary ball mill is more preferable.

Conditions of the ball milling treatment are appropriately adjusted according to the treatment target. A material of pulverization balls (media) is not particularly limited, and examples thereof include agate, silicon nitride, zirconia, alumina, and iron-based alloys, and stabilized zirconia (YSZ) is preferable. The average particle diameter of the pulverization balls is not particularly limited, and from the viewpoint that the solid electrolyte (I) can be produced with high productivity, it is preferably 1 to 10 mm and more preferably 3 to 7 mm. The average particle diameter is obtained by randomly measuring diameters of 50 pulverization balls and arithmetically averaging the measured values. When the pulverization balls are not spherical, the major axis is defined as the diameter. The number of pulverization balls is not particularly limited.

A material of the pulverization pot in the ball milling treatment is also not particularly limited. Examples thereof include agate, silicon nitride, zirconia, alumina, and iron-based alloys, and stabilized zirconia (YSZ) is preferable.

The rotation speed of the ball milling treatment is not particularly limited, and can be set to, for example, 200 to 700 rpm, and more preferably 250 to 550 rpm. The treatment time of the ball milling is not particularly limited, and can be set to, for example, 10 to 200 hours, and more preferably 20 to 140 hours. The atmosphere of the ball milling treatment may be an air or an inert gas (for example, argon, helium, nitrogen, or the like) atmosphere.

In the production of the solid electrolyte (I), it is preferable to perform the following steps 1A to 3A.
Step 1A: Step of subjecting a lithium-containing oxide to a mechanical milling treatment in the presence of a lithium salt
Step 2A: Step of mixing the product obtained in step 1A with water
Step 3A: Step of removing water from the dispersion liquid obtained in step 2A to obtain a solid electrolyte (I)

In step 1A, the amount of the lithium salt used is not particularly limited, and is appropriately adjusted so as to obtain the solid electrolyte (I) defined in the present invention.

In the step 2A, the amount of water used is not particularly limited. For example, with respect to 100 parts by mass of the product obtained in step 1A, the amount of water used can be set to 10 to 200 parts by mass, and the amount of water used is more preferably set to 50 to 150 parts by mass.

The method of mixing the product obtained in step 1A with water is not particularly limited, and the mixture may be mixed at once, or water may be added stepwise to the product obtained in step 1A and mixed. At the time of mixing, ultrasonic treatment may be performed as necessary. The time of the ultrasonic treatment is not particularly limited, and can be, for example, 10 minutes to 5 hours.

Step 3A is a step of removing water from the dispersion liquid obtained in step 2A to obtain a solid electrolyte (I). The method of removing water from the dispersion liquid obtained in step 2A is not particularly limited, and water may be removed by heat treatment or water may be removed by vacuum drying treatment.

Before the step 1A, a step 0 of subjecting a lithium-containing oxide to a mechanical milling treatment under an environment in which a lithium salt is not present may be performed.

When the solid electrolyte (I) contains a polymer having an SP value of 20 or more, for example, in the step 2A, a polymer having an SP value of 20 or more can be mixed.

In the production of the solid electrolyte (I), it is also preferable to perform the following steps 1B to 3B instead of the steps 1A to 3A.
Step 1B: Step of subjecting a lithium-containing oxide to a mechanical milling treatment
Step 2B: Step of mixing the product obtained in step 1B, water, and a lithium salt
Step 3B: Step of removing water from the dispersion liquid obtained in step 2B to obtain a solid electrolyte (I)

The difference between step 1B and step 1A lies in that the mechanical milling treatment is performed in the presence of a lithium salt in step 1A, whereas the mechanical milling treatment is performed without using a lithium salt in step 1B. Therefore, in step 2B, the product obtained in step 1B, water, and a lithium salt are mixed.

The procedure of step 2B is not particularly limited, and may be a method in which the product obtained in step 1B, water, and a lithium salt are mixed at once (method 1), a method in which the product obtained in step 1B and water are mixed to prepare a dispersion liquid, and then the obtained dispersion liquid is mixed with a lithium salt (method 2), or a method in which the product obtained in step 1B and water are mixed to prepare a dispersion liquid 1, a lithium salt and water are mixed to prepare a solution 2, and the dispersion liquid 1 and the solution 2 are mixed (method 3). When the product obtained in step 1B is mixed with water, a dispersion treatment such as an ultrasonic treatment may be appropriately performed.

In method 2, when the dispersion liquid obtained by mixing the product obtained in step 1B with water and the lithium salt are mixed, if the amount of the lithium salt is too large, the resulting liquid tends to gel, and the mixing amount of the lithium salt is restricted. In contrast, in method 3, even when the product obtained in step 1B and the lithium salt are mixed in an approximately equimolar amount, gelation of the liquid hardly occurs, and the mixing amount of the lithium salt can be further increased. In this regard, method 3 is preferable.

The procedures of step 3B and step 3A are the same.

When the solid electrolyte (I) contains a polymer having an SP value of 20 or more, for example, in the step 2B, a polymer having an SP value of 20 or more can be mixed.

In the production of the solid electrolyte (I), it is also preferable to perform the following steps 1C to 3C instead of the steps 1A to 3A.
Step 1C: Step of subjecting a lithium-containing oxide to a mechanical milling treatment
Step 2C: Step of mixing the product obtained in step 1C with water
Step 3C: Step of mixing the product obtained by removing water from the dispersion liquid obtained in step 2C with a lithium salt to obtain a solid electrolyte (I)

The procedures of step 1C and step 1B are the same.

The procedures of step 2C and step 2A are the same.

Step 3C is different from steps 3A and 3B in that the product obtained by removing water from the dispersion liquid obtained in step 2C is mixed with a lithium salt.

In step 3C, the amount of the lithium salt used is not particularly limited, and is appropriately adjusted so as to obtain the solid electrolyte (I) defined in the present invention.

The method of mixing the product obtained by removing water from the dispersion liquid obtained in step 2C with the lithium salt is not particularly limited, and may be a method in which the product is impregnated with a solution in which the lithium salt is dissolved in water to mix both.

When the solid electrolyte (I) contains a polymer having an SP value of 20 or more, for example, in the step 2C and/or 3C, a polymer having an SP value of 20 or more can be mixed.

In the solid electrolyte (I) obtained as described above, water is removed until the solid electrolyte becomes solid particles, but the H₂O content based on the Karl Fischer titration method at 130°C is considerably higher than 12.5% by mass. Therefore, the solid electrolyte (Ia) is obtained by further subjecting the solid electrolyte (I) obtained as described above to an appropriate drying treatment. Examples of such a drying treatment include a more careful vacuum drying treatment. In addition, for example, it is possible to dry to a specific low H₂O content level by leaving it in a glove box set at 25°C and a relative humidity of 15% (dew point: -3°C) or less.

Also, in the production of the solid electrolyte (I), the solid electrolyte (Ia) in the form of a film can be obtained on a substrate by applying a slurry state before water is removed onto the substrate and subjecting the coating film to the appropriate drying treatment.

### (Component Composition of Solid Electrolyte (I))

The solid electrolyte (I) used in the present invention is an amorphous solid electrolyte as described above, and the value of the ratio of the content of the lithium salt to a content of the lithium-containing oxide in the solid electrolyte (I) is 0.001 to 1.5 as a molar ratio.

The value of the ratio of the content of the lithium salt to the content of the lithium-containing oxide in the solid electrolyte (I) is preferably 0.001 to 1.2, more preferably 0.01 to 1.2, still more preferably 0.1 to 1.2, and particularly preferably 0.5 to 1.2 as a molar ratio.

The molar amounts of the lithium-containing oxide and the lithium salt in the solid electrolyte (I) can be determined based on elemental analysis.

In the production of the solid electrolyte (I), in a state in which the solid electrolyte (I) obtained by removing water is not subjected to the appropriate drying treatment, the H₂O content based on the Karl Fischer titration method at 130°C is preferably 30% by mass or less, and more preferably 25% by mass or less. With such a H₂O content, the solid electrolyte (I) can be handled as solid particles.

Also, in a state in which the solid electrolyte (I) obtained by removing water is not subjected to the above appropriate drying treatment, the H₂O content in the solid electrolyte (I) based on the Karl Fischer titration method at 130°C is, for example, 20% by mass or more.

### - Lithium-containing oxide -

The lithium-containing oxide constituting the solid electrolyte (I) contains Li, B, and O as described above.

The lithium-containing oxide is preferably a compound represented by Li₂₊ₓB_{4+y}O_{7+z} (-0.3 < x < 0.3, -0.3 < y < 0.3, -0.3 < z < 0.3). That is, when the molar amount of Li is represented with the molar amount of B as 4.00, the molar amount of Li is preferably 1.58 to 2.49 (that is, 1.7 × 4/4.3 to 2.3 × 4/3.7), and the molar amount of O is preferably 6.23 to 7.89 (that is, 6.7 × 4/4.3 to 7.3 × 4/3.7). In other words, when the molar content of B is 4.00, the relative value of the molar content of Li is preferably 1.58 to 2.49, and the molar amount of O is preferably 6.23 to 7.89. Such a lithium-containing oxide typically includes lithium tetraborate (Li₂B₄O₇).

In addition, the lithium-containing oxide is also preferably a compound represented by Li₁₊ₓB_{3+y}O_{5+z} (-0.3 < x < 0.3, -0.3 < y < 0.3, -0.3 < z < 0.3). Such a lithium-containing oxide typically includes lithium triborate (LiB₃O₅).

Further, the lithium-containing oxide is also preferably a compound represented by Li₃₊ₓB_{11+y}O_{18+z} (-0.3 < x < 0.3, -0.3 < y < 0.3, -0.3 < z < 0.3). Such a lithium-containing oxide typically includes Li₃B₁₁O₁₈.

Furthermore, the lithium-containing oxide is also preferably a compound represented by Li₃₊ₓB_{7+y}O_{12+z} (-0.3 < x < 0.3, -0.3 < y < 0.3, -0.3 < z < 0.3). Such a lithium-containing oxide typically includes Li₃B₇O₁₂.

Therefore, the lithium-containing oxide is preferably at least one kind of Li2+xB4+yO7+z, Li₁₊ₓB_{3+y}O_{5+z}, Li₃₊ₓB_{11+y}O_{18+z}, and Li₃₊ₓB_{7+y}O_{12+z}.

Instead of the lithium-containing oxide or together with the lithium-containing oxide, at least one kind of LiBO₅, Li₂B₇O₁₂, LiB₂O₃(OH)H₂O, Li₄B₈O₁₃(OH)₂(H₂O)₃, and the like can be used as the lithium-containing oxide.

In the solid electrolyte (I), the lithium-containing oxide is in an amorphous state. That is, the lithium-containing oxide is also in a desired amorphous state in the solid electrolyte (I) so that the solid electrolyte (I) is in the amorphous state described above.

Among them, the lithium-containing oxide is preferably amorphous lithium tetraborate.

### - Lithium salt -

The lithium salt constituting the solid electrolyte (I) used in the present invention is not particularly limited, and examples thereof include salts composed of Li⁺ and anions, and salts composed of Li⁺ and organic anions are preferable, and salts composed of Li⁺ and organic anions having a halogen atom are more preferable.

The lithium salt constituting the solid electrolyte (I) used in the present invention preferably contains two or more specific elements selected from the group consisting of group 3 elements of the periodic table, group 4 elements of the periodic table, group 13 elements of the periodic table, group 14 elements of the periodic table, group 15 elements of the periodic table, group 16 elements of the periodic table, group 17 elements of the periodic table, and H.

As the lithium salt constituting the solid electrolyte (I) used in the present invention, for example, a compound represented by formula (1) is preferable.

Formula (1) LiN(R_{f1}SO₂)(R_{f2}SO₂)

R_{f1} and R_{f2} each independently represent a halogen atom or a perfluoroalkyl group.

When R_{f1} and R_{f2} are perfluoroalkyl groups, the number of carbon atoms in the perfluoroalkyl group is not particularly limited.

R_{f1} and R_{f2} are preferably a halogen atom or a perfluoroalkyl group having 1 to 6 carbon atoms, more preferably a halogen atom or a perfluoroalkyl group having 1 to 2 carbon atoms, and still more preferably a halogen atom. When the volume of the end group is increased, steric hindrance becomes large and causes inhibition of ion conduction. Therefore, when R_{f1} and R_{f2} are perfluoroalkyl groups, it is more preferable that the number of carbon atoms is small.

The lithium salt that can be contained in the solid electrolyte (I) used in the present invention is not limited to the compound represented by the formula (1). The lithium salt that can be contained in the solid electrolyte (I) used in the present invention is exemplified below.

(L-1) Inorganic lithium salts: inorganic fluoride salts such as LiPF₆, LiBF₄, LiAsF₆, and LiSbF₆; perhaloacid salts such as LiClO₄, LiBrO₄, and LiIO₄; inorganic chloride salts such as LiAlCl₄.

(L-2) Fluorine-containing organolithium salts: perfluoroalkanesulfonic acid salts such as LiCF₃SO₃; fluorosulfonylimide salts or perfluoroalkanesulfonylimide salts such as LiN(CF₃SO₂)₂, LiN(CF₃CF₂SO₂)₂, LiN(FSO₂)₂ (in the present specification, also described as Li(FSO₂)₂N), and LiN(CF₃SO₂)(C₄F₉SO₂); perfluoroalkanesulfonylmethide salts such as LiC(CF₃SO₂)₃; fluoroalkylfluorophosphates (preferably perfluoroalkylfluorophosphates) such as Li[PF₅(CF₂CF₂CF₃)], Li[PF₄(CF₂CF₂CF₃)₂], Li[PF₃(CF₂CF₂CF₃)₃], Li[PF₅(CF₂CF₂CF₂CF₃)], Li[PF₄(CF₂CF₂CF₂CF₃)₂], and Li[PF₃(CF₂CF₂CF₂CF₃)₃].

(L-3) Oxalatoborate salts: lithium bis(oxalato)borate and lithium difluorooxalatoborate.

In addition to the above, examples include LiF, LiCl, LiBr, LiI, Li₂SO₄, LiNO₃, Li₂CO₃, CH₃COOLi, LiAsF₆, LiSbF₆, LiAlCl₄, and LiB(C₆H₅)₄.

Among them, LiPF₆, LiBF₄, LiAsF₆, LiSbF₆, LiClO₄, Li(R_{f1}SO₂), LiN(R_{f1}SO₂)₂, LiN(FSO₂)₂, or LiN(R_{f1}SO₂)(R_{f2}SO₂) is preferable, and LiPF₆, LiBF₄, LiN(R_{f1}SO₂)₂, LiN(FSO₂)₂, or LiN(R_{f1}SO₂)(R_{f2}SO₂) is more preferable. In these examples, R_{f1} and R_{f2} each independently represent a perfluoroalkyl group, and the number of carbon atoms is preferably 1 to 6, more preferably 1 to 4, and still more preferably 1 or 2. In addition, LiNO₃ and 1,1,2,2,3,3-hexafluoropropane-1,3-disulfonimide lithium are also preferable as the lithium salt.

The content of each element in the solid electrolyte (I) is specified by ordinary elemental analysis. As a method of elemental analysis, for example, Li and B are analyzed by ICP-OES (Inductively coupled plasma optical emission spectrometry), N and the like are analyzed by an inert gas fusion method, and for example, F and S are analyzed by combustion ion chromatography. As for O, the analysis masses of elements other than O can be added together and calculated as a difference from the total amount of the powder. The method of calculating the content of each element is not limited to the above, and the content of other elements may be estimated from the analysis result of the content of one element in consideration of the structure of the compound to be used.

From the content of each element calculated by elemental analysis, the molar amounts of Li, O, and other elements when the molar amount of B is 4.00 can be calculated.

The ionic conductivity (27°C) of the solid electrolyte (I) is not particularly limited, and from the viewpoint of application to various applications, it is preferably 1.0 × 10⁻⁵ S/cm or more, more preferably 1.0 × 10⁻⁴ S/cm or more, still more preferably 1.0 × 10⁻³ S/cm or more, and particularly preferably 3.0 × 10⁻³ S/cm or more. The upper limit is not particularly limited, but is often 1.0 × 10⁻² S/cm or less.

As described above, the solid electrolyte (I) or the solid electrolyte (Ia) may contain a polymer having an SP value of 20 or more. By containing such a polymer having high hydrophilicity (water solubility), it is possible to impart desired high flexibility or adhesion to the formed layer without substantially impairing the ion conductivity of the formed layer.

The polymer having an SP value of 20 or more has preferably an SP value of 20 or more and 50 or less, more preferably an SP value of 20 or more and 40 or less, and still more preferably an SP value of 20 or more and 35 or less. The SP value can be determined as follows.

The molecular structure of each polymer is input using a calculation program (HSPiP, ver. 4.1.07), and the HSP values (δD, δP, δH) are calculated using the polymer HSP value (Hansen solubility parameter) calculation function attached to the program. Next, the SP value is calculated from the following formula. $SP value = {\left({δD}^{2}+{δP}^{2}+{δH}^{2}\right)}^{1 / 2}$

When the polymer contains a plurality of repeating units, the products of the SP value of each repeating unit and the molar ratio of each repeating unit to all the repeating units are each calculated, and the products are summed to obtain the SP value of the polymer. For example, when the polymer is composed of a repeating unit A having an SP value of A (SPA) and a repeating unit B having an SP value of B (SPB), and the molar amount of the repeating unit A is 0.2 and the molar amount of the repeating unit B is 0.8, with respect to the molar amount 1 of all repeating units of the polymer, the SP value of this polymer is calculated as follows. $SP value = \left(SPA\times 0.2\right) + \left(SPB\times 0.8\right)$

The molecular weight of the polymer having an SP value of 20 or more is not particularly limited. For example, a polymer having a weight average molecular weight of 1000 to 10000000 can be used, and a polymer having a weight average molecular weight of 2000 to 10000000 is preferably used. For example, the weight average molecular weight can be determined by a gel permeation chromatography (GPC) method under the following measurement conditions.
- Column: Tosoh TSKgel G6000 PWXL (13 µm, 7.8 mmID × 300 mm) + TSKgel G4000 PWXL (10 µm, 7.8 mmID × 300 mm)
- Eluent: 0.1 M NaCl aqueous solution
- Flow rate: 1.0 mL/min
- Injection volume: 100 µL
- Oven temperature: 40°C
- Detector: RI (differential refractive index detector)
- Molecular weight calibration sample: pullulan

Specific examples of the polymer having an SP value of 20 or more include carboxymethyl cellulose (CMC, SP value 27.2), polyethylene glycol (PEO, SP value 20.7), polyvinylpyrrolidone (PVP, SP value 22.8), polyvinyl alcohol (PVA, 32.6), polyacrylic acid (SP value 25.6), polyacrylamide (SP value 31.3), poly (N-methylacrylamide) (SP value 27.8), polystyrene sulfone (SP value 23.5), and polylysine (SP value 22.3).

In the present invention, the simple term "carboxymethyl cellulose" means carboxymethyl cellulose or a salt thereof. The same applies to polymers that can take the form of a salt, such as "polyacrylic acid". The SP value "27.2" of "carboxymethyl cellulose" is the SP value of carboxymethyl cellulose itself (a form that is not a salt), and the SP value "25.6" of polyacrylic acid is also the SP value of polyacrylic acid itself (a form that is not a salt). The SP value in the "polymer having an SP value of 20 or more" in the present invention means the SP value in a structure in which the polymer is replaced with a state other than the form of a salt when the polymer is in the form of a salt.

When the solid electrolyte (I) or the solid electrolyte (Ia) contains a polymer having an SP value of 20 or more, the content of the polymer having an SP value of 20 or more in the solid electrolyte (I) or the solid electrolyte (Ia) is preferably 0.1 to 10.0% by mass, more preferably 0.2 to 8.0% by mass, still more preferably 0.4 to 6.0% by mass, and still more preferably 0.6 to 5.0% by mass. Therefore, when the solid electrolyte (I) or the solid electrolyte (Ia) contains a polymer having an SP value of 20 or more, the content of the polymer having an SP value of 20 or more in the solid electrolyte layer constituting the secondary battery of the present invention is also preferably 0.1 to 10.0% by mass, more preferably 0.2 to 8.0% by mass, still more preferably 0.4 to 6.0% by mass, and still more preferably 0.6 to 5.0% by mass.

In the present invention, the polymer having an SP value of 20 or more constitutes the solid electrolyte (I) or the solid electrolyte (Ia). On the other hand, when the solid electrolyte (I) or the solid electrolyte (Ia) containing a polymer having an SP value of 20 or more is used for formation of the positive electrode active material layer, and when it is understood as the content of the polymer having an SP value of 20 or more in the positive electrode active material layer, the content of the polymer having an SP value of 20 or more in the positive electrode active material layer constituting the secondary battery of the present invention is preferably 0.1 to 10.0% by mass, more preferably 0.2 to 8.0% by mass, still more preferably 0.4 to 6.0% by mass, and still more preferably 0.6 to 5.0% by mass.

Similarly, when the solid electrolyte (I) or the solid electrolyte (Ia) containing a polymer having an SP value of 20 or more is used for formation of the negative electrode active material layer, and when it is understood as the content of the polymer having an SP value of 20 or more in the negative electrode active material layer, the content of the polymer having an SP value of 20 or more in the negative electrode active material layer constituting the secondary battery of the present invention is preferably 0.1 to 10.0% by mass, more preferably 0.2 to 8.0% by mass, still more preferably 0.2 to 5.0% by mass, and still more preferably 0.2 to 3.0% by mass.

In addition, when all respective layers of the laminate constituting the secondary battery (laminate including positive electrode active material layer/solid electrolyte layer/negative electrode active material layer) of the present invention contain a polymer having an SP value of 20 or more, the content of the polymer having an SP value of 20 or more in the laminate is preferably 0.1 to 10.0% by mass, more preferably 0.2 to 8.0% by mass, still more preferably 0.4 to 6.0% by mass, and still more preferably 0.6 to 5.0% by mass.

The solid electrolyte (I) contained in the solid electrolyte layer constituting the secondary battery of the present invention is the solid electrolyte (Ia) in which the H₂O content is reduced to a specific range as described above. The solid electrolyte layer may contain other components in addition to the solid electrolyte (Ia).

For example, the solid electrolyte layer may contain another solid electrolyte other than the solid electrolyte (I). The another solid electrolyte means a solid electrolyte capable of moving lithium ions therein. As the solid electrolyte, an inorganic solid electrolyte is preferable. Examples of another solid electrolyte include an oxide-based solid electrolyte, a halide-based solid electrolyte, and a hydride-based solid electrolyte. In consideration of safety, at least one kind of an oxide-based solid electrolyte, a halide-based solid electrolyte, and a hydride-based solid electrolyte is preferable, and an oxide-based solid electrolyte is more preferable.

The content of the solid electrolyte (Ia) in the solid electrolyte layer is preferably 50% by mass or more, more preferably 60% by mass or more, even more preferably 70% by mass or more, also preferably 80% by mass or more, and also preferably 90% by mass. It is also preferable that the solid electrolyte layer is composed of the solid electrolyte (Ia).

The thickness of the solid electrolyte layer constituting the secondary battery of the present invention is not particularly limited, and can be, for example, 5 to 1000 µm, and is preferably 10 to 100 µm. In the present invention, the thickness of the layer can be measured by analyzing a scanning electron microscope (SEM) image of a cross section or using a laser displacement meter.

### <Positive Electrode Layer>

The positive electrode layer is generally composed of a positive electrode current collector and a positive electrode active material layer, but when the positive electrode current collector also functions as a positive electrode active material layer (in other words, when the positive electrode active material layer also functions as a positive electrode current collector), the positive electrode layer does not need to be composed of two layers of the positive electrode current collector and the positive electrode active material layer, and may have a single-layer configuration. In addition, the positive electrode active material layer usually contains a solid electrolyte (preferably an inorganic solid electrolyte) together with the positive electrode active material, but may not contain the solid electrolyte. The content of the positive electrode active material in the positive electrode active material layer is preferably 50% by mass or more, more preferably 60% by mass or more, even more preferably 70% by mass or more, also preferably 80% by mass or more, and also preferably 90% by mass.

When the positive electrode active material layer contains a solid electrolyte, the type of the solid electrolyte is not particularly limited. From the viewpoint of emphasizing higher safety, an oxide-based solid electrolyte can be used.

From the viewpoint of achieving both flexibility and safety at a high level, it is preferable to use the solid electrolyte (I) described above. In this way, the solid electrolyte (I) also acts like a binder of solid particles contained in the positive electrode layer, and the positive electrode layer can be made more flexible. In the obtained secondary battery of the present invention, the solid electrolyte (I) is present as the solid electrolyte (Ia) in which the H₂O content is controlled.

As the positive electrode active material itself used for the positive electrode layer, a positive electrode active material that can be used for a normal lithium ion secondary battery can be widely used. A preferred embodiment of the positive electrode active material will be described below.

### (Positive Electrode Active Material)

The positive electrode active material is preferably one capable of reversibly inserting and/or releasing lithium ions. The positive electrode active material is not particularly limited, and a transition metal oxide is preferable, and a transition metal oxide containing transition metal element(s) Ma (one or more elements selected from Co, Ni, Fe, Mn, Cu, and V) is more preferable. In addition, the transition metal oxide may be mixed with elements Mb (group 1 (Ia) metal elements of the periodic table other than lithium, group 2 (IIa) elements, elements such as Al, Ga, In, Ge, Sn, Pb, Sb, Bi, Si, P, and B). The mixing amount is preferably 0 to 30 mol% with respect to the amount (100 mol%) of the transition metal element(s) Ma. It is more preferable to mix and synthesize such that the molar ratio of Li/Ma is 0.3 to 2.2.

Specific examples of the transition metal oxide include (MA) a transition metal oxide having a layered rock salt structure, (MB) a transition metal oxide having a spinel structure, (MC) a lithium-containing transition metal phosphate compound, (MD) a lithium-containing transition metal halogenated phosphate compound, and (ME) a lithium-containing transition metal silicate compound. Among them, the transition metal oxide having a layered rock salt structure (MA) is preferable, and LiCoO₂ or LiNi_{1/3}Co_{1/3}Mn_{1/3}O₂ is more preferable.

Examples of the transition metal oxide having a layered rock salt structure (MA) include LiCoO₂ (lithium cobaltate [LCO]), LiNiO₂ (lithium nickelate), LiNi_{0.85}Co_{0.10}Al_{0.05}O₂ (lithium nickel cobalt aluminate [NCA]), LiNi_{1/3}Co_{1/3}Mn_{1/3}O₂ (lithium nickel manganese cobaltate [NMC]), and LiNi_{0.5}Mn_{0.5}O₂ (lithium manganese nickelate).

Examples of the transition metal oxide having a spinel structure (MB) include LiMn₂O₄ (LMO), LiNi_{0.5}Mn_{1.5}O₄ ([LNMO]), LiCoMnO₄, Li₂FeMn₃O₈, Li₂CuMn₃O₈, Li₂CrMn₃O₈, and Li₂NiMn₃O₈.

Examples of the lithium-containing transition metal phosphate compound (MC) include olivine type iron phosphates such as LiFePO₄ and Li₃Fe₂(PO₄)₃, iron pyrophosphates such as Li₂CoP₂O₇ (LCP) and LiFeP₂O₇, cobalt phosphates such as LiCoPO₄, and monoclinic NASICON type vanadium phosphates such as Li₃V₂(PO₄)₃ (lithium vanadium phosphate).

Examples of the lithium-containing transition metal halogenated phosphate compound (MD) include fluorinated iron phosphates such as Li₂FePO₄F, fluorinated manganese phosphates such as Li₂MnPO₄F, and fluorinated cobalt phosphates such as Li₂CoPO₄F.

Examples of the lithium-containing transition metal silicate compound (ME) include Li₂FeSiO₄, Li₂MnSiO₄, and Li₂CoSiO₄.

The shape of the positive electrode active material is not particularly limited, and is usually particulate. The volume average particle diameter of the positive electrode active material is not particularly limited, and is preferably, for example, 0.1 to 50 µm. The volume average particle diameter of the positive electrode active material particles can be determined in the same manner as the volume average particle diameter of the negative electrode active material described later.

The positive electrode active material obtained by the baking method may be used after being washed with water, an acidic aqueous solution, an alkaline aqueous solution, or an organic solvent.

Similarly to the negative electrode active material described later, the positive electrode active material may be surface-coated with a surface coating agent described later, sulfur or phosphorus, or further with an active ray.

One kind of the positive electrode active material may be used singly, or two or more kinds thereof may be used in combination.

### (Positive electrode current collector)

The current collector constituting the positive electrode layer is an electron conductor. In addition, the positive electrode current collector is usually in the form of a film sheet.

Examples of the constituent material of the positive electrode current collector include aluminum, an aluminum alloy, stainless steel, nickel, and titanium, and aluminum or an aluminum alloy is preferable. Examples of the positive electrode current collector also include those obtained by treating the surface of aluminum or stainless steel with carbon, nickel, titanium, or silver (those on which a thin film is formed).

The thickness of the positive electrode active material layer constituting the secondary battery of the present invention is not particularly limited, and can be, for example, 5 to 500 µm, and is preferably 20 to 200 µm.

Also, the thickness of the positive electrode current collector constituting the secondary battery of the present invention is not particularly limited, and can be, for example, 10 to 100 µm, and is preferably 10 to 50 µm.

### <Negative Electrode Layer>

The negative electrode layer is generally composed of a negative electrode current collector and a negative electrode active material layer, but when the negative electrode current collector also functions as a negative electrode active material layer (in other words, when the negative electrode active material layer also functions as a negative electrode current collector), the negative electrode layer does not need to be composed of two layers of the negative electrode current collector and the negative electrode active material layer, and may have a single-layer configuration. In addition, the negative electrode active material layer usually contains a solid electrolyte (preferably an inorganic solid electrolyte) together with the negative electrode active material, but may not contain the solid electrolyte.

The content of the negative electrode active material in the negative electrode active material layer is preferably 50% by mass or more, more preferably 60% by mass or more, even more preferably 70% by mass or more, also preferably 80% by mass or more, and also preferably 90% by mass.

When the negative electrode active material layer contains a solid electrolyte, the type of the solid electrolyte is not particularly limited. From the viewpoint of emphasizing higher safety, an oxide-based solid electrolyte can be used.

From the viewpoint of achieving both flexibility and safety at a high level, it is preferable to use the solid electrolyte (I) described above. In this way, the solid electrolyte (I) also acts like a binder of solid particles contained in the negative electrode layer, and the negative electrode layer can be made more flexible. In the obtained secondary battery of the present invention, the solid electrolyte (I) is present as the solid electrolyte (Ia) in which the H₂O content is controlled.

As the negative electrode active material itself used for the negative electrode layer, a negative electrode active material that can be used for a normal lithium ion secondary battery can be widely used. A preferred embodiment of the negative electrode active material will be described below.

### (Negative Electrode Active Material)

The negative electrode active material is preferably one capable of reversibly inserting and releasing lithium ions. The negative electrode active material is not particularly limited, and examples thereof include a carbonaceous material, an oxide of a metal or a metalloid element, a lithium simple substance, a lithium alloy, and a negative electrode active material capable of forming an alloy with lithium.

The carbonaceous material used as the negative electrode active material is a material substantially composed of carbon. Examples thereof include petroleum pitch, carbon black such as acetylene black (AB), graphite (natural graphite and artificial graphite such as vapor-grown graphite), and carbonaceous materials obtained by baking various synthetic resins such as PAN (polyacrylonitrile)-based resin or furfuryl alcohol resin.

Further, examples thereof also include various carbon fibers such as PAN-based carbon fibers, cellulose-based carbon fibers, pitch-based carbon fibers, vapor-grown carbon fibers, dehydrated PVA (polyvinyl alcohol)-based carbon fibers, lignin carbon fibers, glassy carbon fibers, and activated carbon fibers, mesophase microspheres, graphite whiskers, and tabular graphite.

These carbonaceous materials can also be divided into a hardly graphitizable carbonaceous material (also referred to as hard carbon) and a graphite-based carbonaceous material depending on the degree of graphitization.

In addition, it is preferable that the carbonaceous material has the lattice spacing, density, or crystallite size described in JP-A-S62-022066, JP-A-H2-006856, and JP-A-H3-045473 ("JP-A" means an unexamined published Japanese patent application). The carbonaceous material is not necessarily a single material, and a mixture of natural graphite and artificial graphite described in JP-A-H5-090844 and graphite having a coating layer described in JP-A-H6-004516 ("JP-A" means an unexamined published Japanese patent application) can also be used.

As the carbonaceous material, hard carbon or graphite is preferable, and graphite is more preferable.

The oxide of a metal element or a metalloid element that can be used as the negative electrode active material is not particularly limited as long as it is an oxide capable of occluding and releasing lithium, and examples thereof include an oxide of a metal element (a metal oxide), a composite oxide of a metal element, a composite oxide of a metal element and a metalloid element, and an oxide of the metalloid element (a metalloid oxide). The composite oxide of a metal element and the composite oxide of a metal element and a metalloid element are also collectively referred to as the metal composite oxide.

As these oxides, amorphous oxides are preferable, and chalcogenides which are reaction products between metal elements and group 16 elements of the periodic table are also preferable.

In the present invention, the metalloid element refers to an element exhibiting intermediate properties between those of a metal element and a non-metal element, and the metalloid elements usually include six elements including boron, silicon, germanium, arsenic, antimony, and tellurium, and further include three elements including selenium, polonium, and astatine.

Also, the "amorphous" means a substance having a broad scattering band with an apex in a range of 20° to 40° in terms of 2θ value in case of being measured by an X-ray diffraction method using CuKα rays, and the oxide may have a crystalline diffraction line. The highest intensity in a crystalline diffraction line observed in a range of 40° to 70° in terms of 2θ value is preferably 100 times or less and more preferably 5 times or less with respect to the intensity of a diffraction line at the apex in a broad scattering band observed in a range of 20° to 40° in terms of 2θ value, and it is still more preferable that the oxide does not have a crystalline diffraction line.

Among the compound group consisting of the amorphous oxides and the chalcogenides, amorphous oxides of metalloid elements or the chalcogenides are more preferable, and (composite) oxides consisting of one element or a combination of two or more elements selected from groups 13 (IIIB) to 15 (VB) elements of the periodic table (for example, Al, Ga, Si, Sn, Ge, Pb, Sb, and Bi), or chalcogenides are still more preferable.

As the amorphous oxides and the chalcogenides, Ga₂O₃, GeO, PbO, PbO₂, Pb₂O₃, Pb₂O₄, Pb₃O₄, Sb₂O₃, Sb₂O₄, Sb₂O₈Bi₂O₃, Sb₂O₈Si₂O₃, Sb₂O₅, Bi₂O₃, Bi₂O₄, GeS, PbS, PbS₂, Sb₂S₃, or Sb₂S₅ is preferable.

As the negative electrode active material that can be used in combination with the amorphous oxide negative electrode active material mainly containing Sn, Si, or Ge, a carbonaceous material capable of occluding and/or releasing lithium ions or lithium metal, a lithium simple substance, a lithium alloy, or a negative electrode active material capable of being alloyed with lithium is preferable.

It is preferable that the oxide of a metal element or a metalloid element (particularly, the metal (composite) oxide) and the chalcogenides contain at least one of titanium and lithium as constituent components from the viewpoint of high current density charge-discharge characteristics.

Examples of the metal composite oxide containing lithium (lithium composite metal oxide) include composite oxides of lithium oxide and the metal oxide, the metal composite oxide, or the chalcogenide. More specifically, examples thereof include Li₂SnO₂.

The negative electrode active material (for example, a metal oxide) also preferably contains a titanium element (titanium oxide). Specifically, Li₄Ti₅O₁₂ (lithium titanium oxide [LTO]) is preferable in that the volume variation during occlusion and release of lithium ions is small, and thus the rapid charge-discharge characteristics are excellent, and the degradation of the electrode is suppressed, whereby it becomes possible to improve the life of the all-solid-state lithium ion secondary battery.

The lithium alloy as the negative electrode active material is not particularly limited as long as it is an alloy usually used as a negative electrode active material for an all-solid-state lithium ion secondary battery, and examples thereof include a lithium aluminum alloy.

The negative electrode active material capable of forming an alloy with lithium is not particularly limited as long as it is usually used as a negative electrode active material for an all-solid-state lithium ion secondary battery. Examples of the negative electrode active material include a negative electrode active material (alloy) containing a silicon element or a tin element and metals such as Al and In, and a negative electrode active material containing a silicon element (silicon element-containing active material) capable of exhibiting higher battery capacity is preferable, and a silicon element-containing active material in which the content of the silicon element is 50 mol% or more of all the constituent elements is more preferable.

In general, a negative electrode containing these negative electrode active materials (for example, a Si negative electrode containing a silicon element-containing active material, a Sn negative electrode containing a tin element-containing active material) can occlude more Li ions than a carbon negative electrode (graphite, acetylene black, and the like). That is, the occlusion amount of Li ions per unit mass increases. Therefore, it is possible to increase the battery capacity. As a result, there is an advantage that the battery driving time can be extended.

Examples of the silicon element-containing active material include silicon materials such as Si and SiOx (0 < x ≤ 1), and silicon-containing alloys containing titanium, vanadium, chromium, manganese, nickel, copper, or lanthanum (for example, LaSi₂, VSi₂, La-Si, Gd-Si, and Ni-Si), or organized active materials (for example, LaSi₂/Si). Other examples include active materials containing a silicon element and a tin element, such as SnSiO₃ and SnSiS₃. Incidentally, since SiOx itself can be used as a negative electrode active material (a metalloid oxide) and Si is produced by the operation of an all-solid-state lithium ion secondary battery, SiOx can be used as a negative electrode active material capable of being alloyed with lithium (a precursor material thereof).

Examples of the negative electrode active material having a tin element include Sn, SnO, SnO₂, SnS, SnS₂, and the active materials containing a silicon element and a tin element.

In terms of battery capacity, the negative electrode active material is preferably a negative electrode active material capable of being alloyed with lithium, more preferably the silicon material or the silicon-containing alloy (the alloy containing a silicon element), and still more preferably silicon (Si) or a silicon-containing alloy.

It is also preferable to use a titanium-niobium composite oxide as the negative electrode active material. The titanium-niobium composite oxide has a high theoretical volume capacity density, and is expected to have a long life and enable rapid charging. Examples of the titanium-niobium composite oxide include TiNb₂O₇.

The shape of the negative electrode active material is not particularly limited, but is preferably particulate. The volume average particle diameter of the negative electrode active material is not particularly limited, but is preferably 0.1 to 60 µm, more preferably 0.5 to 20 µm, and still more preferably 1.0 to 15 µm.

The volume average particle diameter is measured by the following procedure.

The negative electrode active material is diluted using water (heptane in the case of a material unstable to water) in a 20 mL sample bottle to prepare 1% by mass of a dispersion liquid. The diluted dispersion liquid sample is irradiated with 1 kHz ultrasonic waves for 10 minutes and then immediately used for testing. Data capturing is carried out 50 times using this dispersion liquid sample, a laser diffraction/scattering-type particle size distribution analyzer, and a quartz cell for measurement at a temperature of 25°C to obtain a volume average particle diameter. For other detailed conditions and the like, refer to the description of JIS Z 8828: 2013 "Particle size analysis - dynamic light scattering" as necessary. Five samples per level are prepared, and the average value thereof is adopted.

One kind of the negative electrode active material may be used singly, or two or more kinds thereof may be used in combination.

The surface of the negative electrode active material may be surface-coated with another metal oxide.

Examples of the surface coating agent include metal oxides containing Ti, Nb, Ta, W, Zr, Al, Si, or Li. Specific examples thereof include spinel titanate, tantalum-based oxides, niobium-based oxides, and lithium niobate-based compounds, and examples thereof include Li₄Ti₅O₁₂, Li₂Ti₂O₅, LiTaO₃, LiNbO₃, LiAlO₂, Li₂ZrO₃, Li₂WO₄, Li₂TiO₃, Li₂B₄O₇, Li₃PO₄, Li₂MoO₄, Li₃BO₃, LiBO₂, Li₂CO₃, Li₂SiO₃, SiO₂, TiO₂, ZrO₂, Al₂O₃, B₂O₃, and Li₃AlF₆.

In addition, the electrode surface containing the negative electrode active material may be surface-treated with sulfur or phosphorus.

Furthermore, the particle surface of the negative electrode active material may be subjected to surface treatment with an active ray or an active gas (for example, plasma) before and after the surface coating.

### (Negative electrode current collector)

The current collector constituting the negative electrode layer is an electron conductor. In addition, the negative electrode current collector is usually in the form of a film sheet.

Examples of the constituent material of the negative electrode current collector include aluminum, copper, a copper alloy, stainless steel, nickel, zinc, and titanium, and aluminum, copper, a copper alloy, or stainless steel is preferable.

Examples of the negative electrode current collector also include those obtained by treating the surface of the constituent material with carbon, nickel, titanium, or silver.

The thickness of the negative electrode active material layer constituting the secondary battery of the present invention is not particularly limited, and can be, for example, 5 to 500 µm, and is preferably 20 to 200 µm.

Also, the thickness of the negative electrode current collector constituting the secondary battery of the present invention is not particularly limited, and can be, for example, 10 to 100 µm, and is preferably 10 to 50 µm.

The positive electrode layer and the negative electrode layer may contain components other than the solid electrolyte and other than the active material (other components) in the active material layers thereof. For example, a conductive auxiliary agent can be contained.

As the conductive auxiliary agent, one known as a general conductive auxiliary agent can be used. Examples of the conductive auxiliary agent include graphites such as natural graphite and artificial graphite which are electron conductive materials, carbon blacks such as acetylene black, ketjen black, and furnace black, amorphous carbon such as needle coke, vapor-grown carbon fibers, fibrous carbon such as carbon nanotubes, and carbonaceous materials such as graphene and fullerene. In addition, a conductive polymer such as polyaniline, polypyrrole, polythiophene, polyacetylene, and a polyphenylene derivative may be used.

In addition to the conductive auxiliary agent, a normal conductive auxiliary agent containing no carbon atom such as metal powder or metal fiber may be used.

The conductive auxiliary agent refers to one that does not insert and release Li when the battery is charged and discharged, and does not function as an active material. Therefore, among the conductive auxiliary agents, those that can function as an active material in the active material layer when the battery is charged and discharged are classified not as conductive auxiliary agents but as active materials. Whether or not the active material functions when the battery is charged and discharged is not uniquely determined, but is determined by a combination with the active material.

Other components also include lithium salts.

### <Production of All-Solid-State Lithium Ion Secondary Battery>

The secondary battery of the present invention can be produced with reference to a normal method of producing an all-solid-state secondary battery except that the solid electrolyte (I) is used for at least a solid electrolyte layer, and the H₂O content based on the Karl Fischer titration method at 130°C of the solid electrolyte (I) constituting a laminate including a positive electrode active material layer, the solid electrolyte layer, and a negative electrode active material layer is controlled to 4.5 to 12.5% by mass (the H₂O content of the solid electrolyte (I) is controlled so that the solid electrolyte (Ia) is present as the solid electrolyte (Ia)).

As described above, in order to reduce the H₂O content of the solid electrolyte (I) constituting the laminate including a positive electrode active material layer, a solid electrolyte layer, and a negative electrode active material layer to the level defined in the present invention to obtain the solid electrolyte (Ia) in the obtained secondary battery, in the production of the secondary battery of the present invention, it is preferable to form the laminate including a positive electrode active material layer, a solid electrolyte layer, and a negative electrode active material layer using the solid electrolyte (I), and then subject the laminate to the above-described appropriate drying treatment. It is also preferable to individually appropriately subject the respective layers to the drying treatment, and laminate the dried layers.

In addition, also by forming the laminate including a positive electrode active material layer, a solid electrolyte layer, and a negative electrode active material layer using the solid electrolyte (Ia) by sequentially compacting the respective layers or the like, the H₂O content based on the Karl Fischer titration method at 130°C of the solid electrolyte constituting the laminate can be controlled to 4.5 to 12.5% by mass.

Preferred embodiments of the method of producing the secondary battery of the present invention will be described.

The method of producing the secondary battery of the present invention includes obtaining a laminate in which a positive electrode layer, a solid electrolyte layer, and a negative electrode layer are arranged in this order. In addition, in order to set the H₂O content of the laminate including a positive electrode active material layer, a solid electrolyte layer, and a negative electrode active material layer to the content defined in the present invention, the production of the secondary battery of the present invention preferably includes a step of subjecting the positive electrode active material layer, the solid electrolyte layer, and the negative electrode active material layer to an appropriate drying treatment individually or in the state of a laminate. This drying method is not particularly limited, and for example, vacuum drying (preferably freeze-vacuum drying) or leaving in a box having a dew point of, for example, -10°C or lower can be performed. In addition, heat treatment or the like may be combined.

The secondary battery of the present invention is preferably formed by sealing a laminate in which the positive electrode layer, the solid electrolyte layer, and the negative electrode layer are arranged in this order. By sealing, it is possible to more reliably prevent moisture from being mixed into the solid electrolyte layer, and cycle characteristics can be further improved. The sealing method is not particularly limited as long as it can completely block or suppress mixing of moisture (air). Examples of the sealing method include a method of sealing the laminate by closing a lid of a housing (battery cell) for storing the laminate in which the positive electrode layer, the solid electrolyte layer, and the negative electrode layer are arranged in this order with a gasket such as an O-ring interposed therebetween.

In addition, a method of forming a laminate in which the positive electrode layer, the solid electrolyte layer, and the negative electrode layer are arranged in this order is not particularly limited. For example, a composition (slurry) for forming a positive electrode containing a positive electrode active material and a solid electrolyte is applied onto a metal foil as a positive electrode current collector to form a positive electrode active material layer, and then a dispersion liquid (slurry) for forming a solid electrolyte layer containing a solid electrolyte is applied onto the positive electrode active material layer to form a solid electrolyte layer. Similarly to the positive electrode active material layer, a composition (slurry) for forming a negative electrode containing a negative electrode active material and a solid electrolyte is applied onto a metal foil as a negative electrode current collector to form a negative electrode active material layer, and a multilayer coating film of solid electrolyte layer/positive electrode active material layer/positive electrode current collector and a coating film of negative electrode active material layer/negative electrode current collector are bonded so as to be positive electrode current collector/positive electrode active material layer/solid electrolyte layer/negative electrode active material layer/negative electrode current collector. The whole laminate is appropriately dried to a desired level and subjected to a pressure treatment to obtain an all-solid-state lithium ion secondary battery as shown in FIG. 1.

As another method, it is also possible to produce an all-solid-state lithium ion secondary battery by separately preparing a positive electrode active material layer, a solid electrolyte layer, and a negative electrode active material layer, laminating the layers, appropriately drying the whole laminate to a desired level and pressuring the dried laminate.

In this case, in the formation of the respective layers, it is possible to form the respective layers as self-supporting films by arranging a support such as a nonwoven fabric as necessary.

In addition, a layer can also be formed by using a solid electrolyte (Ia) in which the H₂O content based on the Karl Fischer titration method at 130°C is controlled to 4.5 to 12.5% by mass, and directly performing compact molding (powder pressing) or the like without forming the solid electrolyte (Ia) into a slurry. For example, a composition (solid particle) for forming a positive electrode containing the solid electrolyte (Ia) in which the H₂O content is controlled as described above and a positive electrode active material is prepared, and a composition (solid particle) for forming a negative electrode is prepared by mixing the solid electrolyte (Ia) in which the H₂O content is controlled as described above and a negative electrode active material. It is also possible to produce an all-solid-state lithium ion secondary battery by forming a positive electrode active material layer on a positive electrode current collector by arranging a composition for forming a positive electrode on the positive electrode current collector and compacting the composition, then forming a solid electrolyte layer on the positive electrode active material layer by arranging the solid electrolyte (Ia) on the positive electrode active material layer and compacting the solid electrolyte (Ia), arranging a composition for forming a negative electrode and a negative electrode current collector on the solid electrolyte layer and compacting the composition, and subjecting the whole to a pressure treatment as necessary. Similarly to the above, the order of forming the respective layers may be reversed.

The method of producing the secondary battery of the present invention is not limited to that described above as long as the secondary battery defined in the present invention is obtained.

In the production of the secondary battery of the present invention, even if a sulfide-based solid electrolyte is not used as the solid electrolyte, it is possible to form a layer in which interface resistance between solid particles or between layers is suppressed by the action of the oxide-based solid electrolyte (Ia) that is easily plastically deformable by pressure.

Since the solid electrolyte (Ia) itself is soft and plastically deformed, and acts like a binder to contribute to improvement of binding properties between solid particles or between layers, it is also possible to form a layer without using a binder such as an organic polymer.

The secondary battery of the present invention is preferably initialized after production or before use. The method of initialization is not particularly limited, and for example, the initialization can be performed by performing initial charge and discharge in a state where the press pressure is increased, and then releasing the pressure until the pressure falls within the range of the pressure condition at the time of using the secondary battery.

### <Applications of All-Solid-State Lithium Ion Secondary Battery>

The secondary battery of the present invention can be applied to various applications. The application aspect is not particularly limited, and in a case of being mounted in an electronic apparatus, examples thereof include a notebook computer, a pen-input personal computer, a mobile personal computer, an e-book player, a mobile phone, a cordless phone handset, a pager, a handy terminal, a portable fax machine, a portable copier, a portable printer, a headphone stereo, a video movie, a liquid crystal television, a handy cleaner, a portable CD, a mini disc, an electric shaver, a transceiver, an electronic notebook, a calculator, a memory card, a portable tape recorder, a radio, and a backup power supply. Other consumer applications include an automobile, an electric vehicle, a motor, a lighting instrument, a toy, a game device, a road conditioner, a watch, a strobe, a camera, and a medical device (a pacemaker, a hearing aid, a shoulder massage device, and the like). Furthermore, the secondary battery of the present invention can be used for a variety of military applications and universe applications. In addition, the secondary battery of the present invention can also be combined with a solar battery.

The present invention will be described in more detail based on Examples. However, the present invention is not to be construed in a limited manner by the Examples.

### EXAMPLES

### [Reference Example 1 (REx. 1)]

Using a ball mill (P-7 manufactured by Fritsch GmbH), powdery Li₂B₄O₇ crystals (LBO powder) (manufactured by Rare Metallic Co., Ltd.) were ball-milled under the conditions of pot: stabilized zirconia (YSZ) (45 mL), pulverization ball: YSZ (average particle diameter: 5 mm, number: 50), rotation speed: 370 rpm (revolutions per minute), LBO powder amount: 1 g, atmosphere: air, ball milling treatment time: 100 hours to obtain a refined lithium-containing oxide (hereinafter, also referred to as a "fine material of lithium-containing oxide").

To 1 g of the obtained fine material of lithium-containing oxide was added 0.05 g of LiFSI (chemical formula: Li(FSO₂)₂N) as a lithium salt (5% by mass with respect to the fine material of lithium-containing oxide), and the mixture was further ball-milled for 100 hours. The obtained powder was added to water so as to have a powder concentration of 42% by mass, and was ultrasonically dispersed for 30 minutes. Subsequently, the obtained dispersion liquid was transferred to a glass petri dish and dried at 120°C for 2 hours in the air to obtain a film of a solid electrolyte. Subsequently, the obtained film was peeled off to obtain a powdery solid electrolyte (I)-1.

### <Preparation and Evaluation of Molded Body of Solid Electrolyte>

The powdery solid electrolyte (I)-1 obtained above was compacted at 27°C (room temperature) and an effective pressure of 220 MPa to obtain a molded body of a solid electrolyte (compact 1). The compact 1 has a columnar shape with a diameter of 10 mm and a thickness of 0.5 to 1 mm. As a result of measuring the ionic conductivity of the resulting compact 1, the ionic conductivity of the compact 1 was 1.5 × 10⁻⁴ S/cm at 27°C and 4.0 × 10⁻⁴ S/cm at 60°C.

The ionic conductivity of the solid electrolyte (I)-1 was calculated by arranging two electrodes made of In foil so as to sandwich the compact 1, measuring the AC impedance between both the In electrodes in the measurement frequency range of 1 Hz to 1 MHz under the conditions of a measurement temperature of 27°C or 60°C and an applied voltage of 50 mV, and analyzing the arc diameter of the obtained Cole-Cole plot (Nyquist plot).

X-ray diffraction measurement of the solid electrolyte (I)-1 was performed as described above using CuKα rays. The measurement conditions were 0.01°/step and 3°/min. As a result, it became clear that the above-described X-ray diffraction characteristics were satisfied, and it was found that the solid electrolyte (I)-1 was in an amorphous state.

With respect to the analysis of each element in the obtained solid electrolyte (I)-1, lithium and boron were quantitatively analyzed by ICP-OES, and fluorine and sulfur were quantitatively analyzed by combustion ion chromatography (combustion IC). N was estimated from the analytical mass of sulfur in consideration of the atomic weights of each element in the Li salt, and O was calculated as a difference from the total amount of the powder by adding the analytical masses of elements other than O. The results are shown in the following tables.

### [Reference Example 2 (REx. 2)]

1 g of the fine material of lithium-containing oxide used in Reference Example 1 was added to water so as to have a concentration of the fine material of 42% by mass, and was ultrasonically dispersed for 30 minutes. To the obtained dispersion liquid was added 0.05 g of LiFSI (chemical formula: Li(FSO₂)₂N) as a lithium salt (5% by mass with respect to the fine material of lithium-containing oxide), and was further ultrasonically dispersed for 30 minutes.

The obtained dispersion liquid was transferred to a glass petri dish and dried at 120°C for 2 hours in the air to obtain a film of a solid electrolyte. Subsequently, the obtained film was peeled off to obtain a powdery solid electrolyte (I)-2. For the solid electrolyte (I)-2, various evaluations were performed in the air in the same manner as in Reference Example 1. The results are collectively shown in the following tables.

### [Reference Example 3 (REx. 3)]

Using a ball mill (P-7 manufactured by Fritsch GmbH), powdery Li₂B₄O₇ (LBO powder) (manufactured by Rare Metallic Co., Ltd.) was ball-milled under the conditions of pot: YSZ (45 ml), pulverization ball: YSZ (average particle diameter: 5 mm, mass: 70 g), rotation speed: 530 rpm (revolutions per minute), LBO powder amount: 4.2 g, atmosphere: air, and ball milling treatment time: 100 hours to obtain a fine material of lithium-containing oxide.

The obtained fine material of lithium-containing oxide was added to water so as to have a concentration of the fine material of 42% by mass, and the mixture was subjected to ultrasonic treatment for 60 minutes to obtain a dispersion liquid 1.

Next, 3.25 g of LiFSI (chemical formula: Li(FSO₂)₂N) as a lithium salt was added to water so as to have a concentration of 87% by mass, and the mixture was subjected to ultrasonic treatment for 60 minutes to obtain a solution 2.

The obtained dispersion liquid 1 and solution 2 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-3. The obtained powder was allowed to stand in the air for a certain period of time, and various evaluations were performed in the air in the same manner as in Reference Example 1 using the solid electrolyte (I)-3. The results are collectively shown in the following tables.

### [Reference Example 4 (REx. 4)]

A dispersion liquid 3 was obtained in the same manner as in the preparation of the dispersion liquid 1 in Reference Example 3.

Next, 2.32 g of LiFSI (chemical formula: Li(FSO₂)₂N) as a lithium salt was added to water at a concentration of 87% by mass, and the mixture was subjected to ultrasonic treatment for 60 minutes to obtain a solution 4.

The obtained dispersion liquid 3 and solution 4 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-4. The obtained powder was allowed to stand in the air for a certain period of time, and various evaluations were performed in the air in the same manner as in Reference Example 1 using the solid electrolyte (I)-4. The results are collectively shown in the following tables.

### [Reference Example 5 (REx. 5)]

A dispersion liquid 5 was obtained in the same manner as in the preparation of the dispersion liquid 1 in Reference Example 3.

Next, 4.65 g of LiFSI (chemical formula: Li(FSO₂)₂N) as a lithium salt was added to water at a concentration of 87% by mass, and the mixture was subjected to ultrasonic treatment for 60 minutes to obtain a solution 6.

The obtained dispersion liquid 5 and solution 6 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-5. For the obtained powder, various evaluations were rapidly performed in the air in the same manner as in Reference Example 1. The results are collectively shown in the following tables.

### [Reference Example 6 (REx. 6)]

A dispersion liquid 7 was obtained in the same manner as in the preparation of the dispersion liquid 1 in Reference Example 3.

Next, 7.13 g of LiTFSI (chemical formula: Li(F₃CSO₂)₂N) as a lithium salt was added to water at a concentration of 87% by mass, and the mixture was subjected to ultrasonic treatment for 60 minutes to obtain a solution 8.

The obtained dispersion liquid 7 and solution 8 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-6. The obtained powder was allowed to stand in the air for a certain period of time, and various evaluations were performed in the air in the same manner as in Reference Example 1 using the solid electrolyte (I)-6. The results are collectively shown in the following tables.

In Reference Example 6, the carbon amount shown in Table 1 below was estimated from the analytical mass of sulfur in consideration of the atomic weights of each element in the lithium salt.

### [Comparative Reference Example 1 (CREx. 1)]

As a result of elemental analysis of the LBO powder (powdery Li₂B₄O₇ crystals that were not ball-milled) used in Reference Example 1, the composition of the obtained LBO powder was Li_{1.96}B_{4.00}O_{6.80}. The LBO powder was compacted at 27°C (room temperature) and an effective pressure of 220 MPa to obtain a compact for comparison C1. The ionic conductivity of the obtained compact C1 could not be detected.

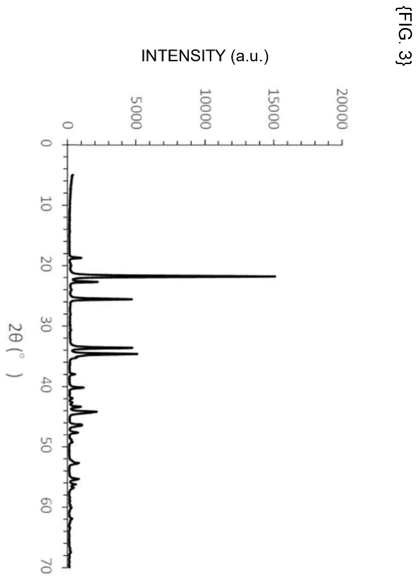

In addition, the LBO powder was subjected to X-ray diffraction measurement as described above. The measurement conditions were 0.01°/step and 3°/min. FIG. 3 shows the X-ray diffraction pattern of the LBO powder of Comparative Reference Example 1. As shown in FIG. 3, in the LBO powder used in Comparative Reference Example 1, a plurality of small width peaks were observed. More specifically, the strongest peak corresponding to the (1,1,2) plane was observed at a position of 21.78° in the 2θ value. As other main diffraction peaks, a peak corresponding to the (2,0,2) plane appeared at a position of 25.54°, a peak corresponding to the (2,1,3) plane appeared at a position of 33.58°, and a peak corresponding to the (3,1,2) plane appeared at a position of 34.62°, and the intensities of these three peaks were almost the same. These peaks are derived from crystal components.

### [Comparative Reference Example 2 (CREx. 2)]

As a result of elemental analysis on the fine material of the lithium-containing oxide prepared in Reference Example 1 (obtained by ball-milling powdery Li₂B₄O₇ crystals), the composition of the fine material of lithium-containing oxide was Li_{1.94}B_{4.00}O_{6.80}.

Next, the fine material of lithium-containing oxide was compacted at 27°C (room temperature) and an effective pressure of 220 MPa to obtain a compact for reference (compact R1). The ionic conductivity of the resulting compact R1 was 7.5 × 10⁻⁹ S/cm at 27°C and 7.5 × 10⁻⁸ S/cm at 60°C.

In the following table, as a result of X-ray diffraction measurement using the CuKα ray described above, a case where the above-described X-ray diffraction characteristics were satisfied was deemed as "A", and a case where the X-ray diffraction characteristics were not satisfied was deemed as "B". In Reference Examples 1 to 6 shown in the tables below and Reference Examples 7 to 13 described below, none of the first peak, the second peak, the third peak and the fourth peak was present, or the intensity ratio of at least one peak among the first peak, the second peak, the third peak and the fourth peak was 2.0 or less in the X-ray diffraction pattern.

In the following table, the "Elemental analysis" column represents the composition of the solid electrolyte (I) obtained in each reference example and the lithium-containing oxide in each comparative reference example as a molar amount of each element as a relative value with the content of B being "4.00".

**[Table 1]**

| | Elemental composition of solid electrolyte | | | | | | |
|---|---|---|---|---|---|---|---|
| | Li | B | O | F | S | N | C |
| REx.1 | 1.94 | 4.00 | 10.66 | 0.03 | 0.02 | 0.01 | |
| REx.2 | 2.04 | 4.00 | 11.09 | 0.06 | 0.05 | 0.02 | |
| REx.3 | 2.70 | 4.00 | 20.90 | 1.36 | 1.38 | 0.69 | |
| REx.4 | 2.50 | 4.00 | 19.90 | 0.95 | 0.98 | 0.49 | |
| REx.5 | 3.00 | 4.00 | 17.10 | 1.95 | 1.98 | 0.99 | |
| REx.6 | 2.90 | 4.00 | 21.45 | 5.00 | 1.90 | 0.95 | 1.90 |
| CREx.1 | 1.96 | 4.00 | 6.80 | | | | |
| CREx.2 | 1.94 | 4.00 | 6.80 | | | | |

**[Table 2]**

| | X-ray diffraction characteristics | Ionic conductivity (S/cm) | |
|---|---|---|---|
| | | 27°C | 60°C |
| REx.1 | A | 1.5 × 10⁻⁴ | 4.0 × 10⁻⁴ |
| REx.2 | A | 1.1 × 10⁻³ | 4.0 × 10⁻³ |
| REx.3 | A | 4.7 × 10⁻³ | - |
| REx.4 | A | 4.1 × 10⁻³ | - |
| REx.5 | A | 3.0 × 10⁻³ | - |
| REx.6 | A | 7.4 × 10⁻⁴ | - |
| CREx.1 | B | Undetectable | Undetectable |
| CREx.2 | A | 7.5 × 10⁻⁹ | 7.5 × 10⁻⁸ |

As shown in the above tables, it is found that the solid electrolytes (I)-1, (I)-2, (I)-3, (I)-4, (I)-5 and (I)-6 of Reference Examples 1 to 6 have excellent ion conductivity. Also, from the results of elemental analysis, it was confirmed that the content of Li in the solid electrolyte was higher in Reference Examples 3 to 6. In Reference Examples 3 to 6, mixing the aqueous solution containing the lithium compound subjected to a mechanical milling treatment with the aqueous solution containing a lithium salt (method 3 in step 2B described above) was performed, and it is presumed that more lithium salt could be mixed, and as a result, the amount of Li incorporated into the solid electrolyte increased. It was also found that the ionic conductivity of Reference Examples 3, 4, and 5 using LiFSI as the lithium salt was further improved as compared with that of Reference Example 6 using LiTFSI. It is presumed to be because Li having high mobility is contained in the increased Li.

### <Influence of Water in Solid Electrolyte>

The compact (pellet) (10 mmφ, 0.9 mmt) of the solid electrolyte (I)-3 obtained in Reference Example 3 was vacuum-dried at 27°C under 60 MPa constraint, and the pressure change and the ionic conductivity with respect to the vacuum drying time were examined. The method of preparing the compact and the ionic conductivity evaluation are as described above except that the In electrodes are changed to Ti electrodes. The results are shown in Table 3.

**[Table 3]**

| Vacuum drying time (min) | Pressure (Pa) | Ionic conductivity (27°C, S/cm) |
|---|---|---|
| 0 | 101325 | 4.8 × 10⁻³ |
| 5 | 200 | 3.8 × 10⁻³ |
| 20 | 20 | 3.3 × 10⁻³ |
| 50 | 10 | 2.6 × 10⁻³ |
| 1080 | 15 | 5.7 × 10⁻⁴ |

As shown in the above table, it is considered that the pressure was 200 Pa at a drying time of 5 minutes and the free water was in a vaporized state, but the ionic conductivity showed a high value of 3.8 × 10⁻³ S/cm, and the ionic conductivity showed 5.7 × 10⁻⁴ S/cm even at a drying time of 1080 minutes and a pressure of 15 Pa. This result indicates that bound water other than free water is present, and this contributes to ion conductivity.

### [Reference Example 7 (REx. 7)]

A dispersion liquid 9 having a concentration of the fine material of lithium-containing oxide of 42% by mass was obtained in the same manner as in the preparation of the dispersion liquid 1 in Reference Example 3.

Next, 7.12 g of LiTFSI (chemical formula: Li(F₃CSO₂)₂N as a lithium salt was added to water so as to have a concentration of 87% by mass, and the mixture was subjected to ultrasonic treatment for 60 minutes to obtain a solution 10.

The obtained dispersion liquid 9 and solution 10 were mixed, and stirred and mixed with a magnetic stirrer for 60 minutes. Subsequently, the obtained dispersion liquid was vacuum-dried at 40°C and 10 Pa for 15 hours to obtain a powdery solid electrolyte (I)-7. The obtained powder was allowed to stand in the air for a certain period of time, and various evaluations were performed in the air in the same manner as in Reference Example 1 using the solid electrolyte (I)-7. The results are collectively shown in the following tables.

### [Reference Example 8 (REx. 8)]

A solid electrolyte (I)-8 was obtained in the same manner as in Reference Example 7 except that the contents of water and LiTFSI in the obtained solid electrolyte (I) were changed to the amounts described in the following table, and various evaluations were performed in the air in the same manner as in Reference Example 1. The results are collectively shown in the following tables.

### [Reference Examples 9 to 13 (REx. 9 to 13)]

Solid electrolytes (I)-9 to (I)-13 were obtained in the same manner as in Reference Example 7 except that LiTFSI was changed to LiFSI and the contents of water and LiFSI in the obtained solid electrolyte (I) were changed to the amounts described in the following table, and various evaluations were performed in the air in the same manner as in Reference Example 1. The results are collectively shown in the following tables. However, in Reference Example 13, the powder obtained by vacuum drying was rapidly evaluated in the air.

In the following table, the "Fine material of lithium-containing oxide" column, the "Lithium salt" column, and the "Water" column represent relative molar ratios. For example, in Reference Example 7, the molar ratio of the lithium salt to the fine material of lithium-containing oxide is 1, and the molar ratio of water to the fine material of lithium-containing oxide is 11. The molar ratio was calculated by the following method.

In the analysis of each element, lithium and boron were quantitatively analyzed by ICP-OES, and fluorine and sulfur were quantitatively analyzed by combustion ion chromatography (combustion IC). N was estimated from the analytical mass of sulfur in consideration of the atomic weights of each element in the Li salt, and O was calculated as a difference from the total amount of the solid electrolyte by adding the analytical masses of elements other than O. In Reference Examples 7 and 8, the carbon amount was estimated from the analytical mass of sulfur in consideration of the atomic weights of each element in the lithium salt. The molar ratio of the fine material of lithium-containing oxide to the lithium salt in the solid electrolyte was calculated from the molar ratio of the element present only in the fine material of lithium-containing oxide (for example, B) to the element present only in the lithium salt. In addition, the molar ratio of the fine material of lithium-containing oxide to water was calculated by subtracting the molar ratio of O contained in the fine material of lithium-containing oxide and the lithium salt from the molar ratio of O in the solid electrolyte to calculate the molar amount of O derived from water, and using the obtained molar amount of O derived from water and the molar amount of the fine material of lithium-containing oxide.

**[Table 4]**

| | Fine material of lithium-containing oxide | Lithium salt | Water |
|---|---|---|---|
| CREx.2 | 1 | 0 | 0 |
| REx.7 | 1 | 1 | 11 |
| REx.8 | 1 | 1.2 | 11 |
| REx.9 | 1 | 0.01 | 4 |
| REx.10 | 1 | 0.03 | 4 |
| REx.11 | 1 | 0.5 | 11 |
| REx.12 | 1 | 0.7 | 11 |
| REx.13 | 1 | 1.0 | 6 |

In addition, the content (% by mass) of each component in the solid electrolyte (I) was calculated based on the molar amount and molecular weight described in Table 4. The results are shown in Table A below.

**[Table A]**

| | Fine material of lithium-containing oxide | Lithium salt | Water |
|---|---|---|---|
| CREx.2 | 100 | 0 | 0 |
| REx.7 | 26 | 44 | 30 |
| REx.8 | 24 | 48 | 28 |
| REx.9 | 70 | 1 | 29 |
| REx.10 | 69 | 2 | 29 |
| REx.11 | 37 | 20 | 43 |
| REx.12 | 34 | 26 | 40 |
| REx.13 | 36 | 40 | 24 |

**[Table 5]**

| | X-ray diffraction characteristics | Ionic conductivity (S/cm) | |
|---|---|---|---|
| | | 27°C | 60°C |
| CREx.2 | A | 7.5 × 10⁻⁹ | 7.5 × 10⁻⁸ |
| REx.7 | A | 7.4 × 10⁻⁴ | - |
| REx.8 | A | 7.2 × 10⁻⁴ | - |
| REx.9 | A | 1.5 × 10⁻⁴ | 4.0 × 10⁻⁴ |
| REx.10 | A | 1.1 × 10⁻³ | 4.0 × 10⁻³ |
| REx.11 | A | 4.1 × 10⁻³ | - |
| REx.12 | A | 4.7 × 10⁻³ | - |
| REx.13 | A | 3.0 × 10⁻³ | - |

As shown in the above table, the solid electrolyte of each reference example had desired characteristics or physical properties and exhibited excellent ion conductivity.

### [Production Example 1] Production of All-Solid-State Lithium Ion Secondary Battery (Without Polymer Having SP Value of 20 or More)

### <Preparation of Fine Material of Lithium-Containing Oxide>

45 g of powdery Li₂B₄O₇ crystals (LBO powder) (manufactured by FUJIFILM Wako Pure Chemical Corporation), 770 g of zirconia beads, and 3 mL of water were charged into a 500 mL zirconia pot, and the pot was sealed with a Teflon ring and a lid made of zirconia. The LBO powder was pulverized using a planetary ball milling machine at 300 rpm for 45 hours to obtain a fine material of lithium-containing oxide.

### <Preparation of Solid Electrolyte Slurry-1>

10 g of the fine material of lithium-containing oxide, 15 g of water, and 11 g of LiFSI were mixed in a beaker, and subjected to ultrasonic treatment for 30 minutes using an ultrasonic cleaner to obtain a dispersion liquid. This dispersion liquid was further stirred with a magnetic stirrer for 30 minutes to obtain a solid electrolyte slurry 1.

The solid electrolyte slurry 1 was vacuum-dried at 40°C and 20 Pa for 15 hours to obtain a powder (solid electrolyte (I)). The obtained powder was stored in a desiccator (relative humidity: 5%) for several days, and then analyzed in the air, and it was confirmed that the powder had the above-described X-ray diffraction characteristics and was in an amorphous state. In addition, the ionic conductivity was measured by the method described above, and the result was 4.5 × 10⁻³ S/cm. Furthermore, the value of the ratio of the content of LiFSI to the content of the lithium-containing oxide was 1 as a molar ratio.

### <Preparation of Positive Electrode Slurry-1>

To 5.2 g of the solid electrolyte slurry 1 were added 5.0 g of a positive electrode active material LiCoO₂ and 4.8 g of a 6% by mass aqueous dispersion liquid of carbon nanotubes (CNTs) (manufactured by KJ SPECIALTY PAPER Co., Ltd.) as a conductive auxiliary agent, and the mixture was stirred with a magnetic stirrer for 30 minutes to obtain a positive electrode slurry 1.

When the positive electrode slurry 1 is applied to a positive electrode current collector, a solid electrolyte layer or the like and dried to form a positive electrode active material layer, the fine material of lithium-containing oxide contained in the solid electrolyte slurry 1, LiFSI, and water (H₂O) remaining after drying are integrated to form a solid electrolyte (I) or (Ia) in the layer.

### <Preparation of Negative Electrode Slurry-1>

To 7.6 g of the solid electrolyte slurry 1 were added 5.0 g of a negative electrode active material Li₄Ti₅O₁₂ and 9.8 g of a 6% by mass aqueous dispersion liquid of CNTs (manufactured by KJ SPECIALTY PAPER Co., Ltd.) as a conductive auxiliary agent, and the mixture was stirred with a magnetic stirrer for 30 minutes to obtain a negative electrode slurry 1.

When the negative electrode slurry 1 is applied to a negative electrode current collector, a solid electrolyte layer or the like and dried to form a negative electrode active material layer, the fine material of lithium-containing oxide contained in the solid electrolyte slurry 1, LiFSI, and water (H₂O) remaining after drying are integrated to form a solid electrolyte (I) or (Ia) in the layer.

### <Production of All-Solid-State Lithium Ion Secondary Battery-1>

The battery was produced according to the following procedure.

The positive electrode slurry 1 was applied to a titanium foil (positive electrode current collector having a thickness of 20 µm), and the negative electrode slurry 1 was applied to an aluminum foil (negative electrode current collector having a thickness of 50 µm). The coating film of the positive electrode slurry 1 was naturally dried in a constant-temperature and constant-humidity chamber at 25°C and a relative humidity of 10% for 30 minutes, and then the solid electrolyte slurry 1 was multi-layered on the dried coating film. Next, in a constant-temperature and constant-humidity chamber controlled to a room temperature of 25°C and a relative humidity of 15% (dew point: -3°C), the multi-layer coating film and the coating film of the negative electrode slurry 1 were punched into a size of 10 mm in diameter and 8 mm in diameter, respectively. Both the dried coating films were bonded to each other so as to be in contact with each other, set in a uniaxial pressure jig (manufactured by Hohsen Corp.), and constrained and sealed at 5 Nm (equivalent to 30 MPa). Subsequently, it was heated at 80°C for 2 hours and returned to room temperature. Thereafter, it was allowed to stand for a certain period of time until the water amount reached an equilibrium state. The obtained cell (positive electrode: 80 µm thick/solid electrolyte layer: 60 µm thick/negative electrode: 100 µm thick) was used as an all-solid-state lithium ion secondary battery of Example 1 (Ex. 1).

### [Production Example 2] Production of All-Solid-State Lithium Ion Secondary Battery (Without Polymer Having SP Value of 20 or More)

An all-solid-state lithium ion secondary battery of Example 2 (Ex. 2) was obtained in the same manner as in [Production Example 1] except that the relative humidity in the constant-temperature and constant-humidity chamber of <Production of All-Solid-State Lithium Ion Secondary Battery-1> was set to 10% (dew point: -9°C) in [Production Example 1].

### [Production Example 3] Production of All-Solid-State Lithium Ion Secondary Battery (Without Polymer Having SP Value of 20 or More)

An all-solid-state lithium ion secondary battery of Example 3 (Ex. 3) was obtained in the same manner as in [Production Example 1] except that the relative humidity in the constant-temperature and constant-humidity chamber of <Production of All-Solid-State Lithium Ion Secondary Battery-1> was set to 4% (dew point: -20°C) in [Production Example 1].

### [Comparative Production Example 1] Production of All-Solid-State Lithium Ion Secondary Battery (Without Polymer Having SP Value of 20 or More)

An all-solid-state lithium ion secondary battery of Comparative Example 1 (CEx. 1) was obtained in the same manner as in [Production Example 1] except that the relative humidity in the constant-temperature and constant-humidity chamber of <Production of All-Solid-State Lithium Ion Secondary Battery-1> was set to 19% (dew point: 0°C) in [Production Example 1].

### [Comparative Production Example 2] Production of All-Solid-State Lithium Ion Secondary Battery (Without Polymer Having SP Value of 20 or More)

An all-solid-state lithium ion secondary battery of Comparative Example 2 (CEx. 2) was obtained in the same manner as in [Production Example 1] except that the relative humidity in a constant-temperature and constant-humidity chamber of <Production of All-Solid-State Lithium Ion Secondary Battery-1> was set to 2.5% (dew point: -25°C) in [Production Example 1].

### [Production Example 4] Production of All-Solid-State Lithium Ion Secondary Battery (With Polymer Having SP Value of 20 or More)

### <Preparation of Solid Electrolyte Slurry-2>

10 g of the fine material of lithium-containing oxide, 9.3 g of water, 11 g of LiFSI, and 0.4 g of carboxymethyl cellulose (CMC, sodium salt, SP value: 27.2) were mixed and uniformly dispersed using a mixer (ARE-310 manufactured by THINKY CORPORATION) to obtain a solid electrolyte slurry 2 (solid content concentration: 70% by mass).

The coating film obtained from the solid electrolyte slurry 2 was stored in a desiccator (relative humidity: 5%) for several days, and then analyzed in the air, and it was confirmed that the coating film had the above-described X-ray diffraction characteristics and was in an amorphous state. In addition, the ionic conductivity was measured by the method described above, and the result was 4.5 × 10⁻³ S/cm. That is, it could be confirmed that the blending of CMC does not affect the ionic conductivity. Furthermore, the value of the ratio of the content of LiFSI to the content of the lithium-containing oxide was 1 as a molar ratio.

### <Preparation of Positive Electrode Slurry-2>

0.5 g of the fine material of lithium-containing oxide, 1.43 g of a 6% by mass aqueous dispersion liquid of CNTs (manufactured by KJ SPECIALTY PAPER Co., Ltd.), 3.77 g of water, 0.55 g of LiFSI, 6 g of a positive electrode active material LiCoO₂, and 0.1 g of carboxymethyl cellulose (CMC, sodium salt, SP value: 27.2) were mixed and uniformly dispersed using a mixer (ARE-310 manufactured by THINKY CORPORATION) to obtain positive electrode slurry 2 (solid content concentration: 58.6% by mass).

When the positive electrode slurry 2 is applied to a positive electrode current collector or a solid electrolyte layer or the like and dried to form a positive electrode active material layer, the fine material of lithium-containing oxide, LiFSI, CMC, and water (H₂O) remaining after drying are integrated to form a solid electrolyte (I) or (Ia) in the layer.

### <Preparation of Negative Electrode Slurry-2>

0.6 g of the fine material of lithium-containing oxide, 4.2 g of a 6% by mass aqueous dispersion liquid of CNTs (manufactured by KJ SPECIALTY PAPER Co., Ltd.), 3.0 g of water, 0.66 g of LiFSI, 4.5 g of a negative electrode active material Li₄Ti₅O₁₂, and 0.035 g of carboxymethyl cellulose (CMC, sodium salt, SP value: 27.2) were mixed and uniformly dispersed using a mixer (ARE-310 manufactured by THINKY CORPORATION) to obtain a negative electrode slurry 2 (solid content concentration: 46.5% by mass).

When the negative electrode slurry 2 is applied to a negative electrode current collector, a solid electrolyte layer or the like and dried to form a negative electrode active material layer, the fine material of lithium-containing oxide, LiFSI, CMC, and water (H₂O) remaining after drying are integrated to form a solid electrolyte (I) or (Ia) in the layer.

### <Production of All-Solid-State Lithium Ion Secondary Battery-2>

The positive electrode slurry 2 was applied to a titanium foil (positive electrode current collector having a thickness of 20 µm), and the negative electrode slurry 2 was applied to an aluminum foil (negative electrode current collector having a thickness of 50 µm). The coating film of the positive electrode slurry 2 was naturally dried in a constant-temperature and constant-humidity chamber at 25°C and a relative humidity of 10% for 30 minutes, and then the solid electrolyte slurry 2 was multi-layered on the dried coating film. Next, in a constant-temperature and constant-humidity chamber controlled to a room temperature of 25°C and a relative humidity of 15% (dew point: -3°C), the multi-layer coating film and the coating film of the negative electrode slurry 2 were punched into a size of 10 mm in diameter and 8 mm in diameter, respectively. Both the dried coating films were bonded to each other so as to be in contact with each other, set in a uniaxial pressure jig (manufactured by Hohsen Corp.), and constrained and sealed at 5 Nm (equivalent to 30 MPa). Subsequently, it was heated at 80°C for 2 hours and returned to room temperature. Thereafter, it was allowed to stand for a certain period of time until the water amount reached an equilibrium state. The obtained cell (positive electrode: 80 µm thick/solid electrolyte layer: 60 µm thick/negative electrode: 100 µm thick) was used as an all-solid-state lithium ion secondary battery of Example 4 (Ex. 4).

### [Production Example 5] Production of All-Solid-State Lithium Ion Secondary Battery (With Polymer Having SP Value of 20 or More)

An all-solid-state lithium ion secondary battery of Example 5 (Ex. 5) was obtained in the same manner as in [Production Example 4] except that the relative humidity of the constant-temperature and constant-humidity chamber of <Production of All-Solid-State Lithium Ion Secondary Battery-2> was set to 10% (dew point: -9°C) in [Production Example 4].

### [Production Example 6] Production of All-Solid-State Lithium Ion Secondary Battery (With Polymer Having SP Value of 20 or More)

An all-solid-state lithium ion secondary battery of Example 6 (Ex. 6) was obtained in the same manner as in [Production Example 4] except that the relative humidity of the constant-temperature and constant-humidity chamber of <Production of All-Solid-State Lithium Ion Secondary Battery-2> was set to 4% (dew point: -20°C) in [Production Example 4].

### [Comparative Production Example 3] Production of All-Solid-State Lithium Ion Secondary Battery (With Polymer Having SP Value of 20 or More)

An all-solid-state lithium ion secondary battery of Comparative Example 3 (CEx. 3) was obtained in the same manner as in [Production Example 4] except that the relative humidity of the constant-temperature and constant-humidity chamber of <Production of All-Solid-State Lithium Ion Secondary Battery-2> was set to 19% (dew point: 0°C) in [Production Example 4].

### [Comparative Production Example 4] Production of All-Solid-State Lithium Ion Secondary Battery (With Polymer Having SP Value of 20 or More)

An all-solid-state lithium ion secondary battery of Comparative Example 4 (CEx. 4) was obtained in the same manner as in [Production Example 4] except that the relative humidity of the constant-temperature and constant-humidity chamber of <Production of All-Solid-State Lithium Ion Secondary Battery-2> was set to 2.5% (dew point: -25°C) in [Production Example 4].

### [Production Examples 7 to 13] Production of All-Solid-State Lithium Ion Secondary Batteries (With Polymer Having SP Value of 20 or More)

All-solid-state lithium ion secondary batteries of Examples 7 to 13 (Ex. 7 to 13) were obtained in the same manner as in [Production Example 5] except that polymer species having an SP value of 20 or more and the content thereof were changed as shown in the tables below in [Production Example 5]. In the table below, PEO represents polyethylene oxide (polyethylene glycol), PVP represents polyvinyl pyrrolidone, and PVA represents polyvinyl alcohol. All CMCs are sodium salts.

### [Analysis Method]

### <H₂O content>

The all-solid-state lithium ion secondary battery prepared above was disassembled in a constant-temperature and constant-humidity chamber in which the humidity was controlled to a room temperature of 25°C and a dew point of - 25°C, and immediately after disassembling so that the H₂O content did not change, a laminate portion including positive electrode active material layer/solid electrolyte layer/negative electrode active material layer (sample) was put in a vial, and the vial was sealed. The mass of the empty vial and the mass of the sealed vial were measured, and the difference between them was defined as the sample mass. In addition, a blank was prepared by putting an atmosphere in the constant-temperature and constant-humidity chamber in a vial and sealing the vial.

The vial was set in a moisture vaporizer for Karl Fischer measurement, heated to a temperature of 130°C, and held for 1 minute. The H₂O content (mass of H₂O) of each sample was measured by a Karl Fischer titration method using a coulometric titration type moisture measuring device while holding the temperature at 130°C and vaporizing moisture. Titration was performed until the H₂O content detected per unit time was no more than baseline (blank). Typical baseline values were 0.1 to 0.4 µg/sec. The H₂O content of the blank was subtracted from the H₂O content determined by the Karl Fischer titration method, and the obtained value was defined as the H₂O content contained in the sample.

From the mass of the sample and each mass of H₂O, the positive electrode active material, the negative electrode active material, and the conductive auxiliary agent (CNT) in the sample, the H₂O content (% by mass) in the solid electrolyte constituting the laminate including a positive electrode active material layer, a solid electrolyte layer, and a negative electrode active material layer was calculated by the following formula. The H₂O content is shown in the table below. It has been confirmed that the positive electrode active material, the negative electrode active material, and the conductive auxiliary agent do not contain detectable H₂O. 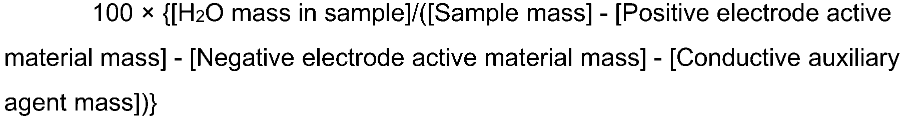 100 × {[H2O mass in sample]/([Sample mass] - [Positive electrode active material mass] - [Negative electrode active material mass] - [Conductive auxiliary agent mass])}

### [Test Example]

### <Initialization of Battery>

The all-solid-state lithium ion secondary battery prepared above was charged and discharged under a temperature condition of 26°C using model 580 charge-discharge measurement system manufactured by Scribner Associates Inc., under the following conditions.

The battery was charged at a constant current value of 3.0 C rate until the battery voltage reached 2.5 V, and after the battery voltage reached 2.5 V, the voltage was kept constant (2.5 V) and the battery was charged until the current value reached 2.4 C rate. After charging, the circuit was opened and left for 10 minutes, and then the battery was discharged at a constant current value of 3.0 C rate until the battery voltage reached 1.8 V. The battery was initialized by performing 20 cycles of charge and discharge with this charge and discharge as one cycle.

### <Charge-Discharge Cycle Characteristics>

The all-solid-state lithium ion secondary battery after the initialization was repeatedly charged and discharged under a temperature condition of 26°C using model 580 charge-discharge measurement system manufactured by Scribner Associates Inc., under the following conditions.

Charging was performed at a constant current value of 3.0 C rate until the battery voltage reached 2.6 V, and after the battery voltage reached 2.6 V, the voltage was made constant (2.6 V), and the battery was charged until the current value reached 2.4 C rate. After charging, the circuit was opened and left for 10 minutes, and then discharged at a constant current value of 3.0 C rate until the battery voltage reached 1.5 V. The charge and discharge up to this point were defined as one cycle. After discharging, the circuit was opened and left for 10 minutes, and then charge and discharge were repeated in the same manner as described above.

In the test of the charge-discharge cycle characteristics, the ratio of the discharge capacity (II) at the 200th cycle to the discharge capacity (I) at the first cycle (Discharge capacity retention ratio (%) = 100 × Discharge capacity (II)/Discharge capacity (I)) was calculated. The results are shown in the following table.

For reference, the polymer content in each layer of the secondary battery is also shown separately in the table.

**[Table 6]**

| | H₂O content | Polymer | | Evaluation | |
|---|---|---|---|---|---|
| | | Type | SP value | Discharge capacity (mAh/g) | Discharge capacity retention ratio (%) |
| Ex.1 | 10.2 | - | - | 165 | 94 |
| Ex.2 | 6.9 | - | - | 163 | 100 |
| Ex.3 | 5.1 | - | - | 160 | 100 |
| CEx.1 | 13.2 | - | - | 168 | 85 |
| CEx.2 | 3.9 | - | - | 130 | 100 |
| Ex.4 | 10.0 | CMC-1 | 27.2 | 166 | 95 |
| Ex.5 | 7.1 | CMC-1 | 27.2 | 163 | 100 |
| Ex.6 | 4.9 | CMC-1 | 27.2 | 159 | 100 |
| CEx.3 | 13.1 | CMC-1 | 27.2 | 169 | 83 |
| CEx.4 | 4.0 | CMC-1 | 27.2 | 132 | 100 |
| Ex.7 | 7.0 | PEO | 20.7 | 158 | 99 |
| Ex.8 | 6.8 | PVP | 22.8 | 158 | 97 |
| Ex.9 | 7.1 | PVA | 32.6 | 157 | 98 |
| Ex.10 | 6.9 | CMC-2 | 27.2 | 160 | 98 |
| Ex.11 | 7.1 | CMC-3 | 27.2 | 159 | 98 |
| Ex.12 | 7.0 | CMC-1 | 27.2 | 160 | 100 |
| Ex.13 | 7.2 | CMC-1 | 27.2 | 163 | 100 |

| | | | | | |
|---|---|---|---|---|---|
| <H₂O content>: H₂O content based on the Karl Fischer titration method at 130°C of the solid electrolyte constituting a laminate including a positive electrode active material layer, the solid electrolyte layer, and a negative electrode active material layer <CMC-1>: Weight average molecular weight 1000000 to 4000000 <CMC-2>: Weight average molecular weight 5000000 to 10000000 <CMC-3>: Weight average molecular weight 590000 <PEO>: Weight average molecular weight 2000 <PVP>: Weight average molecular weight 10000 <PVA>: Weight average molecular weight 40000 | | | | | |

**[Table 7]**

| | Polymer content (% by mass) in each layer constituting secondary battery | | | |
|---|---|---|---|---|
| | In solid electrolyte layer (in solid electrolyte I(a)) | In positive electrode active material layer | In negative electrode active material layer | In laminate (positive electrode active material layer/ solid electrolyte layer/ negative electrode active material layer) |
| Ex.4 | 1.7 | 1.4 | 0.6 | 1.4 |
| Ex.5 | 1.7 | 1.4 | 0.6 | 1.5 |
| Ex.6 | 1.8 | 1.4 | 0.6 | 1.5 |
| CEx.3 | 1.6 | 1.3 | 0.6 | 1.4 |
| CEx.4 | 1.8 | 1.4 | 0.6 | 1.5 |
| Ex.7 | 1.7 | 1.4 | 0.6 | 1.5 |
| Ex.8 | 1.7 | 1.4 | 0.6 | 1.5 |
| Ex.9 | 1.7 | 1.4 | 0.6 | 1.5 |
| Ex.10 | 1.7 | 1.4 | 0.6 | 1.5 |
| Ex.11 | 1.7 | 1.4 | 0.6 | 1.5 |
| Ex.12 | 4.0 | 3.2 | 1.3 | 3.4 |
| Ex.13 | 1.0 | 0.8 | 0.3 | 0.9 |

As shown in the above table, for a laminate including a positive electrode active material layer, a solid electrolyte layer, and a negative electrode active material layer constituting the battery, it was found that by controlling the H₂O content based on the Karl Fischer titration method at 130°C of the solid electrolyte constituting the laminate within the range of 4.5 to 12.5% by mass, the discharge capacity can be maintained at a high level even if charge and discharge are repeated while sufficiently increasing the discharge capacity.

Subsequently, since the flexibility (ductility) of the layer was also evaluated, the results will be described below.

In the laminate including the titanium foil (positive electrode current collector having a thickness of 20 µm) and the multi-layer coating film thereon (the laminate obtained by laminating the positive electrode current collector, the positive electrode active material layer, and the solid electrolyte layer, without a blend of polymer having SP value of 20 or more), which was prepared in Production Example 2, a laminate in which the thickness of the positive electrode layer was changed to 180 µm (the thickness of the positive electrode active material layer was changed to 160 µm), and the thickness of the solid electrolyte layer was changed to 120 µm was prepared. This was dried in a desiccator at 25°C and a relative humidity of 3% for 1 day, and then taken out from the desiccator into a room at 25°C and a relative humidity of 30%. Then, a glass rod having a diameter of 8 mm was brought into contact with the titanium foil side, and the laminate was bent at an angle of 360° such that the titanium foil side was directed inward. As a result, the positive electrode active material layer was peeled off from the titanium foil, and the solid electrolyte layer was also cracked.

On the other hand, in the laminate including the titanium foil (positive electrode current collector having a thickness of 20 µm) and the multi-layer coating film thereon (the laminate obtained by laminating the positive electrode current collector, the positive electrode active material layer, and the solid electrolyte layer, with a blend of polymer having SP value of 20 or more), which was prepared in Production Example 5, when a bending test was conducted in the same manner as described above using a laminate in which the thickness of the positive electrode layer was changed to 180 µm (the thickness of the positive electrode active material layer was changed to 160 µm), and the thickness of the solid electrolyte layer was changed to 120 µm was prepared, delamination did not occur between the layers of the laminate, and cracking did not also occur in the positive electrode active material layer and the solid electrolyte layer.

From the above results, it has been found that when the solid electrolyte contains a polymer having an SP value of 20 or more, ductility can be imparted to the formed layer without lowering the discharge capacity or cycle characteristics, and therefore bending resistance can be sufficiently enhanced even when each layer is formed into a thick film.

Having described the present invention as related to the embodiment, it is our intention that the present invention not be limited by any of the details of the description, unless otherwise specified, but rather be construed broadly within its spirit and scope as set out in the accompanying claims.

The present application claims priority of Patent Application No. 2023-201370 filed in Japan on November 29, 2023, which is herein incorporated by reference as part of the present specification.

### DESCRIPTION OF SYMBOLS

- 1: Negative electrode current collector
- 2: Negative electrode active material layer
- 3: Solid electrolyte layer
- 4: Positive electrode active material layer
- 5: Positive electrode current collector
- 6: Operation portion
- 10: All-solid-state lithium ion secondary battery

## Claims

1. An all-solid-state lithium ion secondary battery comprising a positive electrode layer, a solid electrolyte layer, and a negative electrode layer arranged in this order,
wherein at least the solid electrolyte layer contains an amorphous solid electrolyte which contains a lithium-containing oxide having Li, B, and O, a lithium salt, and H₂O, and in the amorphous solid electrolyte, a ratio of a content of the lithium salt to a content of the lithium-containing oxide is 0.001 to 1.5 as a molar ratio, and
wherein a H₂O content based on the Karl Fischer titration method at 130°C of the solid electrolyte constituting a laminate including a positive electrode active material layer, the solid electrolyte layer, and a negative electrode active material layer is 4.5 to 12.5% by mass.

2. The all-solid-state lithium ion secondary battery according to claim 1, wherein the lithium-containing oxide contains Li₂₊ₓB_{4+y}O_{7+z},
wherein $- 0.3 < x < 0.3 , - 0.3 < y < 0.3 , and - 0.3 < z < 0.3 .$

3. The all-solid-state lithium ion secondary battery according to claim 2, wherein the lithium salt is represented by the following Formula (1):
Formula (1) LiN(R_{f1}SO₂)(R_{f2}SO₂)
wherein R_{f1} and R_{f2} each independently represent a halogen atom or a perfluoroalkyl group.

4. The all-solid-state lithium ion secondary battery according to claim 3, wherein the solid electrolyte contains a polymer having a solubility parameter of 20 or more.

5. A solid electrolyte comprising a lithium-containing oxide having Li, B, and O, a lithium salt, and H₂O,
wherein the solid electrolyte is in an amorphous state, and in the solid electrolyte, a ratio of a content of the lithium salt to a content of the lithium-containing oxide is 0.001 to 1.5 as a molar ratio, and
wherein a H₂O content based on the Karl Fischer titration method at 130°C is 4.5 to 12.5% by mass.

6. The solid electrolyte of claim 5, wherein the lithium-containing oxide contains Li₂₊ₓB_{4+y}O_{7+z},
wherein $- 0.3 < x < 0.3 , - 0.3 < y < 0.3 , and - 0.3 < z < 0.3 .$

7. The solid electrolyte according to claim 6, wherein the lithium salt is represented by the following Formula (1):
Formula (1) LiN(R_{f1}SO₂)(R_{f2}SO₂)
wherein R_{f1} and R_{f2} each independently represent a halogen atom or a perfluoroalkyl group.

8. The solid electrolyte according to claim 7, wherein the solid electrolyte contains a polymer having a solubility parameter of 20 or more.
